# EUROPÄISCHE PATENTSCHRIFT

(11) **EP 4 642 229 B1**
(45) Veröffentlichungstag und Bekanntmachung des Hinweises auf die Patenterteilung: **20.05.2026**
(21) Anmeldenummer: 24786693.2
(22) Anmeldetag: 09.09.2024
(51) Int. Cl.: A01M 1/02

(54) **INSEKTENFALLE UND VERFAHREN ZUR BESTIMMUNG EINER ANZAHL GEFANGENER INSEKTEN**
INSECT TRAP AND METHOD FOR DETERMINING THE NUMBER OF CAPTURED INSECTS
PIÈGE À INSECTES ET PROCÉDÉ DE DÉTERMINATION DU NOMBRE D'INSECTES CAPTURÉS

(30) Priorität: 08.09.2023 AT 601582023; 27.11.2023 AT 509542023
(43) Veröffentlichungstag der Anmeldung: 05.11.2025
(73) Patentinhaber: Contra Calamitates FlexCo, 1060 Vienna (AT)
(72) Erfinder: PROBST, Mona, 33154 Niederntudorf (DE); SCHLENGER, Maximilian, 33106 Paderborn (DE); OTTIGER, Lizanne, 3007 Bern (CH); FRÖHLICH, Elia, 33154 Salzkotten (DE); GASCHL, Bernhard, 3150 Wilhelmsburg (AT)
(74) Vertreter: SONN Patentanwälte GmbH & Co KG
(86) Internationale Anmeldenummer: PCT/AT2024/060347
(87) Internationale Veröffentlichungsnummer: WO 2025/050161

(56) Entgegenhaltungen:
- EP-A1- 3 682 737
- CN-A- 113 475 473
- DE-A1- 3 505 637
- DE-U1- 202015 101 802
- JP-A- 2000 060 402

## Beschreibung

Die Erfindung betrifft eine Insektenfalle, insbesondere eine Borkenkäferfalle, zur Bestimmung einer Anzahl gefangener Insekten, insbesondere gefangener Borkenkäfer, mit einer Sensoreinheit, wobei die Sensoreinheit dazu eingerichtet ist, zur Bestimmung der Anzahl der gefangenen Insekten ein gewichtsabhängiges Signal zu erfassen, wobei das gewichtsabhängige Signal von einem Gewicht der gefangenen Insekten abhängig ist, wobei die Insektenfalle eine Auslöseeinheit mit einem Schwenkarm aufweist, wobei das Gewicht der gefangenen Insekten auf den Schwenkarm wirkt, wobei die Auslöseeinheit dazu eingerichtet ist, bei einem vordefinierten Gewicht auszulösen und den Schwenkarm von einer Sammelstellung in eine Auswurfstellung überzuführen, wobei die Insektenfalle dazu eingerichtet ist, die gefangenen Insekten in der Auswurfstellung des Schwenkarms zumindest teilweise aus der Insektenfalle zu entleeren.

Ferner betrifft die Erfindung ein Verfahren zur Bestimmung einer Anzahl gefangener Insekten, insbesondere gefangener Borkenkäfer, mit einer Insektenfalle.

Insbesondere Borkenkäfer verbreiten sich nicht zuletzt aufgrund der Klimaerwärmung, damit verbunden steigender Hitze und Trockenheit und dem daraus resultierenden Stress für Wälder mit rasanter Geschwindigkeit. Besonders Borkenkäfer verursachen signifikante Schäden, sowohl in Hinblick auf ökonomische wie auch ökologische Gesichtspunkte. Der Befall eines Waldes mit Borkenkäfern wird oftmals erst erkannt, wenn erste Bäume abgestorben sind und somit bereits ein starker Befall vorliegt. In abgelegenen Gebieten, die keiner regelmäßigen Kontrolle unterliegen, kann dies zu großen Populationen an Schädlingen im Allgemeinen und Borkenkäfern im Speziellen führen. Aufgrund der rasanten Verbreitung dieser (und anderer) Schädlinge und des beträchtlichen Schadens, der insbesondere im Falle einer unkontrollierten Verbreitung auftreten kann, ist es notwendig, die Population von Insekten zu überwachen und den Befall einer Gegend (wie eines Waldstücks) möglichst frühzeitig zu erkennen, um zeitgerecht geeignete Maßnahmen treffen zu können. Die Überwachung der Population kann beispielsweise durch Zählen der Insekten erfolgen. Im Allgemeinen geht es darum, den Befall zu quantifizieren, d.h. eine Menge an vorhandenen Insekten abzuschätzen. Der Begriff "Anzahl" ist daher für diese Zwecke allgemein als "Menge" zu verstehen und meint insbesondere jede Messgröße, die zum Gewicht der Insekten zumindest statistisch proportional ist, wie beispielsweise eben die Gesamtzahl oder alternativ das Gesamtgewicht oder (Gesamt-)Volumen der gefangenen Insekten.

Neben Borkenkäfern, die einen besonders hohen Schaden verursachen, ist auch von Interesse, die Verbreitung anderer Insekten, insbesondere von Schädlings-Insekten, zu überwachen.

Aus dem Stand der Technik sind beispielsweise Insektenfallen bekannt, die mittels eines Pheromons gezielt Schädlinge anziehen/anlocken und fangen. Die Anforderungen an solche Insektenfallen sind schon daher besonders hoch, da diese typischerweise in der freien Natur eingesetzt werden und folglich der Witterung, insbesondere Wind, Regen und Schnellfall, ausgesetzt sind. Beispielsweise sind Insektenfallen aus der AT 522 921 B1 und der AT 16255 U1 bekannt.

Entsprechende Fallen werden in regelmäßigen Intervallen beispielsweise durch Forstarbeiter überprüft. Die gefangenen Insekten werden gezählt, die Falle entleert und gegebenenfalls gewartet. Aus der Anzahl der gefangenen Insekten kann ein Befall des betreffenden Gebiets mit entsprechenden Schädlingen erkannt und die Schwere des Befalls abgeschätzt werden. Nachteilig an derartigen Systemen ist der hohe Zeitaufwand, der durch die An- und Abfahrt von und zu den Fallen und das manuelle Auslesen entsteht. Besonders in großflächigen und nur grob erschlossenen Gebieten ist eine engmaschige und regelmäßige Kontrolle mit einem hohen Aufwand verbunden. Typischerweise werden Fallen bis zu zweimal pro Woche überprüft, wobei auch deutlich längere Intervalle keine Ausnahme darstellen. Dadurch ergibt sich zwischen dem Fangen von Insekten und der tatsächlichen Kenntnisnahmen eines etwaigen Befalls ein Zeitversatz im Bereich von Tagen bis hin zu einigen Wochen.

Um diesen Aufwand zu verringern, sind Insektenfallen bekannt, die die Anzahl an gefangenen Insekten automatisiert auslesen bzw. abschätzen und gegebenenfalls die Daten an einen Nutzer weiterleiten.

Beispielsweise ist aus der CN 113 873 440 A ein Monitoringsystem für Termiten mit einem Ködermodul, einem Alarmauslösemodul sowie einem Modul zur drahtlosen Übertragung von Daten bekannt. In Verbindung mit einem Positionsmodul können Daten mittels einer App einem Benutzer angezeigt werden.

Aus der CN 113 475 473 A ist ein Monitoringsystem für Käfer bekannt, das auf Schwerkraftinduktionszählung basiert. Käfer, die durch ein dafür vorgesehenes Modul fallen, bewirken eine Änderung einer Induktion. Aus dieser Induktionsänderung wird auf eine Anzahl an Käfern rückgeschlossen. Ein Datenverarbeitungsmodul verarbeitet die gewonnenen Daten und übermittelt sie an eine Serviceplattform.

Beispielsweise ist aus der CN 214 508 929 eine Zählvorrichtung für Insekten mit einem Außengehäuse und einer Klappe bekannt. Die Klappe wird mittels eines Magneten fixiert und schließt eine Unterseite des Außengehäuses ab. Sobald ein bestimmtes Gewicht an Insekten in der Vorrichtung erreicht ist, öffnet sich die Klappe, um die Insekten aus der Vorrichtung zu entleeren. Durch das Aufklappen wird ein Infrarotsensor ausgelöst. Es ist eine Rückstellfeder vorgesehen, gegen die die Klappe im Zuge der Entleerung prallt. Durch diesen Aufprall an der Rückstellfeder wird die Klappe wieder in die Ausgangsposition gebracht und das Außengehäuse somit wieder verschlossen.

Die CN 113 519 477 A zeigt eine weitere Insektenfalle. Insekten werden in einem Behälter gefangen und bei Erreichen eines bestimmten Gesamtgewichts an Insekten im Behälter entleert. Dazu sind zwei schwenkbar angeordnete Elemente vorgesehen, die von jeweils einer Rückstellfeder und einem Sperrelement in einer geschlossenen Position gehalten werden. Übersteigt das Gewicht der gefangenen Insekten einen Schwellwert, der von der Federkraft der Rückstellfedern festgelegt wird, bewegen sich die Elemente nach unten und werden vom Sperrelement freigegeben. Ein zweiter Magnet, der sich auf dem beweglichen Element befindet und ein erster Magnet, der sich auf einer Außenwand befindet, sollen eine Reibung mit dem beweglichen Element und der Außenwand verringern. Die schwenkbar angeordneten Elemente sollen von den Rückstellfedern in die geschlossene Position rückgeführt werden.

Weitere Insektenfallen sind in EP 3 682 737 A1, JP 2000060402 A, und CN 208242652 U gezeigt. Die CN 113 475 473 A beschreibt ein intelligentes Überwachungsgerät für Käfer, wobei die Erfassung der Anzahl und der Präsenz auf Nutzung der Schwerkraft basiert. Die DE 35 05 637 A1 beschreibt eine Schlitzfalle. Die DE 20 2015 101802 U1 beschreibt eine Anbisserfassungseinrichtung die in Abhängigkeit der Anbissinformation, z. B. basierend auf der Erfassung des Gewichts des Köders, unterschiedliche akustische oder optische Signale erzeugt.

Nachteilig am bekannten Stand der Technik ist unter anderem die hohe Komplexität und die mangelhafte Zuverlässigkeit des Zählmechanismus. Insbesondere im Zusammenhang mit Insektenfallen, die nicht in regelmäßigen Intervallen durch fachkräftiges Personal überprüft werden und/oder an schwer erreichbaren Orten zum Einsatz gelangen, ist jedoch gerade die Zuverlässigkeit eine der zentralsten Eigenschaften. Häufige Fehlfunktionen und gegebenenfalls damit verbundene Fehlmessungen können beispielsweise zu einem falschen Bild eines Schädlingsbefalls führen und den praktischen Nutzen entsprechender Insektenfallen gravierend beeinträchtigen.

Es ist daher Aufgabe der Erfindung, zumindest einzelne Nachteile des Stands der Technik zu lindern oder zu beheben. Insbesondere ist es Aufgabe der Erfindung, eine Insektenfalle und ein Verfahren zur Bestimmung einer Anzahl gefangener Insekten mit einer Insektenfalle mit erhöhter Zuverlässigkeit bereitzustellen.

Gelöst wird die erfindungsgemäße Aufgabe durch eine Insektenfalle der eingangs angeführten Art, wobei die Auslöseeinheit ein Gegengewicht aufweist, wobei die Auslösseinheit dazu eingerichtet ist, den Schwenkarm aufgrund des Gegengewichts von der Auswurfstellung in die Sammelstellung zurückzuführen.

Ferner wird die erfindungsgemäße Aufgabe gelöst durch ein Verfahren zur Bestimmung einer Anzahl gefangener Insekten, insbesondere gefangener Borkenkäfer, mit einer Insektenfalle nach einem der vorhergehenden Ansprüche, mit den Schritten:
- Fangen von Insekten mittels der Insektenfalle;
- Erfassen eines gewichtsabhängigen Signals, wobei das gewichtsabhängige Signal von einem Gewicht der gefangenen Insekten abhängig ist;
- Entleeren der Insektenfalle bei Erreichen eines vordefinierten Gewichts an gefangenen Insekten mittels einer Auslöseeinheit mit einem Schwenkarm, wobei die Auslöseeinheit bei einem vordefinierten Gewicht an gefangenen Insekten in der Insektenfalle auslöst und den Schwenkarm von einer Sammelstellung in eine Auswurfstellung überführt, wobei die gefangenen Insekten in der Auswurfstellung des Schwenkarms zumindest teilweise aus der Insektenfalle entleert werden;
- Zurückführen des Schwenkarms von der Auswurfstellung in die Sammelstellung aufgrund eines Gegengewichts der Auslöseeinheit;
- Ermitteln einer Anzahl an gefangenen Insekten aus dem gewichtsabhängigen Signal.

Die Insektenfalle kann beispielsweise ein Gehäuse aufweisen und kann dazu eingerichtet sein, in freier Natur eingesetzt zu werden. Das Gehäuse kann beispielsweise Kunststoff, Metall und/oder Holz aufweisen. Die Insektenfalle kann beispielsweise eine Schlitzfalle mit Fangschlitzen aufweisen, wobei Insekten durch die Fangschlitze in einen Innenraum der Insektenfalle gelangen können. Die Fangschlitze können beispielsweise so angeordnet sein, dass Insekten auf einfache Weise in die Insektenfalle gelangen können, diese allerdings durch die Fangschlitze nicht oder nur schwer wieder verlassen können. Schlitzfallen, insbesondere Borkenkäfer-Schlitzfallen sind aus dem Stand der Technik, beispielsweise aus der DE 3 505 637 A1, bekannt.

Zur Bestimmung einer Anzahl der gefangenen Insekten, insbesondere gefangener Borkenkäfer, weist die Insektenfalle eine Sensoreinheit auf. Die Sensoreinheit ist dazu eingerichtet, zur Bestimmung der Anzahl der gefangenen Insekten ein gewichtsabhängiges Signal zu erfassen, wobei das gewichtsabhängige Signal von einem Gewicht der gefangenen Insekten abhängig ist. Das gewichtsabhängige Signal ist ein elektronisches Signal. Beispielsweise kann das gewichtsabgängige Signal proportional zu einem Gewicht der gefangenen Insekten sein. Die Insektenfalle weist weiters eine Auslöseeinheit mit einem Schwenkarm auf, wobei das Gewicht der gefangenen Insekten auf den Schwenkarm wirkt. Die Auslöseeinheit ist dazu eingerichtet, bei einem vordefinierten Gewicht auszulösen und den Schwenkarm von einer Sammelstellung in eine Auswurfstellung überzuführen. Die gefangenen Insekten werden in der Auswurfstellung des Schwenkarms zumindest teilweise, insbesondere zur Gänze, aus der Insektenfalle entleert. Die Insektenfalle, insbesondere das Gehäuse der Insektenfalle, kann beispielsweise eine Entleeröffnung aufweisen, durch welche die Insekten aus der Insektenfalle entleert werden. Die Entleeröffnung kann beispielsweise an einer einem Boden zugewandten Unterseite des Gehäuses vorgesehen sein. Es können demnach Insekten in der Insektenfalle gefangen werden, bis ein Gesamtgewicht der gefangenen Insektenfalle ein vordefiniertes Gewicht erreicht. Sobald dieses vordefinierte Gewicht erreicht wird (oder überschritten ist), löst die Auslöseeinheit aus. Die Auslöseeinheit weist den Schwenkarm auf, auf den das Gewicht der gefangenen Insekten wirkt. Der Schwenkarm befindet sich bei der leeren Insektenfalle in Ruhe in einer Sammelstellung. In der Sammelstellung des Schwenkarms können fortlaufend weitere Insekten in der Insektenfalle gefangen werden. Durch jedes gefangene Insekt erhöht sich folglich das Gewicht der gefangenen Insekten in der Insektenfalle. Durch das Auslösen der Auslöseeinheit wird der Schwenkarm in die Auswurfstellung übergeführt. In der Auswurfstellung werden die gefangenen Insekten aus der Insektenfalle (zumindest teilweise) entleert. Nach der Entleerung sind weniger, insbesondere keine, Insekten in der Insektenfalle gefangen. Dadurch ist das Gewicht der gefangenen Insekten (d.h., das Gewicht der Insekten, die sich in der Insektenfalle befinden und dort gefangen sind) wieder geringer als das vordefinierte Gewicht. Beispielsweise können alle gefangenen Insekten aus der Insektenfalle entleert werden. In diesem Fall beträgt das Gewicht der gefangenen Insekten direkt nach der Entleerung null. Der Schwenkarm kann beispielsweise um eine horizontale Achse drehbar und/oder schwenkbar gelagert sein. Der Schwenkarm kann beispielsweise die Entleeröffnung in der Sammelstellung verschließen bzw. in der Auswurfstellung freigeben.

Die Insektenfalle kann beispielsweise dazu eingerichtet sein, bevorzugt Insekten eines bestimmten Typs zu fangen. Beispielsweise kann die Insektenfalle eine BorkenkäferFalle sein und dementsprechend dazu eingerichtet sein, überwiegend Borkenkäfer zu fangen. Die Insektenfalle kann alternativ dazu eingerichtet sein, Insekten einer anderen Insektenart in der Landwirtschaft, Forstwirtschaft, in Park- und Gartenanlagen sowie in Wohn- und Industriegebäuden zu fangen. Beispielsweise kann die Insektenfalle dazu eingerichtet sein, Crambidae, Taufliegen und/oder Termiten zu fangen. Dazu kann die Insektenfalle beispielsweise ein Pheromon oder allgemein einen Lockstoff aufweisen, das/der eine bestimmte Insektenart besonders anzieht oder anlockt. Auch eine Geometrie der Fangschlitze kann an die Insektenart angepasst sein. Beispielsweise ist ein mittleres Gewicht eines Insekts des ausgewählten Typs (beispielsweise das mittlere Gewicht eines Borkenkäfers) bekannt. Das vordefinierte Gewicht, bei dem die Auslöseeinheit auslöst, kann beispielsweise zumindest ein Vielfaches, beispielsweise zumindest das 20-fache, das 30-fache, das 50-fache, 100-fache oder zumindest das 200-fache dieses mittleren Gewichts betragen. Das vordefinierte Gewicht kann optional weniger als das 500-fache des mittleren Gewichts betragen. Beispielsweise kann das mittlere Gewicht eines Borkenkäfers 7 mg betragen, wie beispielsweise aus Bednarz, Bartlomiej & Kacprzyk, Magdalena. (2012). The weight - volume method of Ips typographus L. (Coleoptera: Scolytinae) sex determination. 10.13140/RG.2.2.28092.28807 bekannt ist. Das vordefinierte Gewicht kann beispielsweise das fünfzig-fache dieses mittleren Gewichts, also 350 mg betragen.

Die Sensoreinheit kann beispielsweise eine Waage aufweisen und das Gewicht, das auf den Schwenkarm wirkt, ermitteln. Das daraus resultierende Signal entspricht dem Gesamtgewicht der gefangenen Insekten. Durch Division dieses Gesamtgewichts durch das mittlere Gewicht eines (bestimmten) Insekts, kann die Anzahl an gefangenen Insekten abgeschätzt (d.h. bestimmt) werden.

Die Auslöseeinheit weist ein Gegengewicht auf und ist dazu eingerichtet, den Schwenkarm aufgrund des Gegengewichts von der Auswurfstellung in die Sammelstellung zurückzuführen. Sobald die gefangenen Insekten (zumindest teilweise) aus der Insektenfalle entleert sind, wird der Schwenkarm wieder zurück in die Sammelstellung geführt. Diese Rückführung des Schwenkarms in die (stabile) Sammelstellung wird durch ein Gegengewicht erreicht. Das Gegengewicht kann beispielsweise durch den Schwenkarm selbst gebildet sein oder mittels einer Umlenkung und/oder einem Zug derart mit dem Schwenkarm verbunden sein, dass das Gegengewicht den Schwenkarm bei Wegfall der Gewichtskraft von gesammelten Insekten (oder wenn diese Gewichtskraft einen vordefinierten Grenzwert unterschreitet) in die Sammelstellung zurückführt, beispielsweise dreht oder schwenkt. Mechanisch wirken die Gewichtskraft und das Gegengewicht als Drehmomente auf den Schwenkarm. Die Insektenfalle ist daher vorzugsweise so gestaltet, dass die Gewichtskraft der gefangenen Insekten in einem in Bezug auf den Abstand zur Schwenkachse relativ kleinen Bereich des Schwenkarms wirkt, sodass das Drehmoment möglichst genau geschätzt werden kann. Vorzugsweise ist die radiale Ausdehnung dieses Bereichs (d.h. in dem Insekten auf den Schwenkarm wirken) kleiner als dessen Abstand von der Schwenkachse. Zudem ist es günstig, wenn die Größe dieses Bereichs möglichst unabhängig von der Anzahl der gesammelten Insekten ist. Insbesondere im Bereich eines vordefinierten Gewichts sollte eine Veränderung der Anzahl der gesammelten Insekten im Mittel (über viele Füll-Vorgänge) nicht zu einer Verlagerung des Schwerpunkts der Gesamtheit der gesammelten Insekten in Bezug auf die Schwenkachse führen können.

Die erfindungsgemäße Insektenfalle ist aus mehreren Gründen besonders zuverlässig. Einerseits wird die Anzahl an gefangenen Insekten durch ein gewichtsabhängiges Signal, das auf den Schwenkarm wirkt, ermittelt. Die Ermittlung eines gewichtsabhängigen Signals ist im Vergleich zu Messverfahren, gemäß denen gefangene Insekten beispielsweise optisch vermessen werden oder die auf einer von den gefangenen Insekten bewirkten Induktion beruhen, verhältnismäßig einfach, robust und wenig anfällig für Fehler. Andererseits ist die Insektenfalle aufgrund des besonders einfachen und robusten Rückstellmechanismus zur Rückführung des Schwenkarms von der Auswurfstellung in die Sammelstellung sehr zuverlässig. Im Vergleich dazu hängt beispielsweise das Zurückführen der Klappe der aus der CN 214 508 929 bekannten Falle von einer Rückstellfeder ab. Durch die Verwendung einer Rückstellfeder hängt das Verschließen des Au-ßengehäuse von der Dynamik der Entleerung ab. Trifft beispielsweise die Klappe auf die Rückstellfeder bevor die Insekten ausreichend entleert wurden, wird die Klappe von weiteren Insekten, die aus dem Außengehäuse fallen, gebremst und somit ein Verschluss des Außengehäuses nachhaltig verhindert. Der Verschluss des Außengehäuses hängt jedoch gerade von der in der Rückstellfeder gespeicherten kinetischen Energie ab, die aus dem Aufschwingen der Klappe resultiert. Wenn der Verschluss des Außengehäuses mit der Klappe fehlschlägt, bleibt demnach mangels kinetischer Energie der Klappe und mangels gespeicherter Energie in der Rückstellfeder das Außengehäuse nach unten hin geöffnet. Insekten, die in die Falle gelangen, können diese ungehindert wieder verlassen. Eine Überwachung der Population schlägt demnach fehl. Aufgrund fehlender Messdaten kann der Eindruck entstehen, dass keine Insekten gefangen wurden, wodurch es zu einer Fehleinschätzung eines Befalls und folglich zu einer ungehinderten Ausbreitung der Insekten kommen kann. Die Funktionsweise der erfindungsgemäßen Insektenfalle hängt gerade nicht von einer Kinetik einer Klappe, sondern von einem stabilen Zustand des Schwenkarms samt Gegengewicht in der Sammelstellung ab, der im Falle eines Gewichts an gefangenen Insekten unterhalb des vordefinierten Gewichts zuverlässig erreicht wird bzw. vorliegt. Eine Kinetik des Auslösevorgans und des Entleerens der erfindungsgemäßen Insektenfalle hat keinen Einfluss auf die Funktionsweise der erfindungsgemäßen Insektenfalle. Die hohe (mechanische) Zuverlässigkeit der Insektenfalle erlaubt einen Einsatz in besonders schwer zugänglichen, unwegsamen Gebieten und eine verbesserte und einfachere Überwachung von Insektenpopulationen, insbesondere von Borkenkäferpopulationen.

Die Insektenfalle kann zum Schutz des Ökosystems Wald beitragen, indem ein Befall mit Borkenkäfern frühzeitig erkannt werden kann. Dies wiederum führt zu einer CO₂-Senke des Waldes und kann somit die Wohlfahrtsfunktion erhalten und verbessern. Gleichzeitig kann durch den Erhalt von Waldfläche das CO₂-Speicherpotenzial erhalten oder sogar erhöht werden. Mittels nachhaltiger Waldbewirtschaftung in den beobachteten Gebieten kann weiterhin (d.h. trotz einer stärkeren Verbreitung von Schädlingen wie dem Borkenkäfer) die Holzindustrie beliefert werden und zudem die Nutzfunktion des Waldes auch für zukünftigen Generationen sichergestellt werden. Dabei ist nicht nur das Holz als nachwachsender Rohstoff wichtig, sondern auch die Wirkung des Waldes als Erholungsraum für den Menschen. Die erfindungsgemäße Insektenfalle ermöglicht es, die Anpassungsfähigkeit des Waldes an die Klimaveränderungen zu beobachten und nach Möglichkeit zu verbessern.

Um die Anzahl gefangener Insekten (insbesondere Borkenkäfer) zu bestimmen mit der erfindungsgemäßen Insektenfalle zu bestimmen, sind erfindungsgemäß zumindest die folgenden Schritte vorgesehen:
- Fangen von Insekten mittels der Insektenfalle;
- Erfassen eines gewichtsabhängigen Signals, wobei das gewichtsabhängige Signal von einem Gewicht der gefangenen Insekten abhängig ist;
- Entleeren der Insektenfalle bei Erreichen eines vordefinierten Gewichts (d.h. Gesamtgewicht) an gefangenen Insekten mittels einer Auslöseeinheit mit einem Schwenkarm, wobei die Auslöseeinheit bei einem vordefinierten Gewicht an gefangenen Insekten in der Insektenfalle auslöst und den Schwenkarm von einer Sammelstellung in eine Auswurfstellung überführt, wobei die gefangenen Insekten in der Auswurfstellung des Schwenkarms zumindest teilweise aus der Insektenfalle entleert werden;
- Zurückführen des Schwenkarms von der Auswurfstellung in die Sammelstellung aufgrund eines Gegengewichts der Auslöseeinheit;
- Ermitteln einer Anzahl an gefangenen Insekten aus dem gewichtsabhängigen Signal.

Das gewichtsabhängige Signal kann optional ein zeitdiskretes Signal mit Datenpunkten sein, wobei die Sensoreinheit dazu eingerichtet ist zumindest bei einem Auslösevorgang der Auslöseeinheit einen Datenpunkt aufzunehmen. Ein Auslösevorgang beginnt mit dem Erreichen des vordefinierten Gewichts an gefangenen Insekten, woraufhin der Schwenkarm von der Sammelstellung in die Auswurfstellung übergeführt wird. Der Auslösevorgang endet mit dem Zurückführen des Schwenkarms von der Auswurfstellung in die Sammelstellung. Der Auslösevorgang umfasst somit das Auslösen der Auslöseeinheit, das Überführen des Schwenkarms von der Sammelstellung in die Auswurfstellung, das (zumindest teilweise) Auswerfen der gefangenen Insekten aus der Insektenfalle, sowie das Zurückführen des Schwenkarms aus der Auswurfstellung in die Sammelstellung. Die Sensoreinheit kann beispielsweise dazu eingerichtet sein, die Auslösevorgänge zu erfassen. Ein Datenpunkt kann beispielsweise das Auslösen der Auslöseeinheit zu einem Zeitpunkt betreffen. Ein Datenpunkt kann beispielsweise das Zurückführen des Schwenkarms von der Auswurfstellung in die Sammelstellung betreffen. Insbesondere kann die Sensoreinheit dazu eingerichtet sein, ausschließlich die Auslösevorgänge zu erfassen. Durch das (bekannte) vordefinierte Gewicht, bei dem die Auslöseeinheit auslöst, und das (ebenso bekannte) mittlere Gewicht eines Insekts kann eine Anzahl an gefangenen Insekten, die pro Auslösevorgang der Auslöseeinheit entleert werden (bzw. zuvor gefangen wurden) abgeschätzt werden.

Beispielsweise kann die Sensoreinheit dazu eingerichtet sein, eine Anzahl an Auslösevorgängen der Auslöseeinheit zu erfassen. Mittels des verhältnismäßig einfachen Zählens von Auslösevorgängen der Auslöseeinheit kann eine Anzahl an insgesamt gefangenen Insekten auf einfache Art und Weise ermittelt werden. Das gewichtsabhängige Signal kann die Anzahl an Auslösevorgängen aufweisen. Nachdem das Auslösen der Auslöseeinheit vom Gewicht der gefangenen Insekten abhängt, ist das ermittelte Signal ein gewichtsabhängiges Signal. Beispielsweise kann das gewichtsabhängige Signal die Anzahl an Auslösevorgängen pro Zeiteinheit, beispielsweise pro Stunde, Tag oder Woche, aufweisen. Beispielsweise kann das gewichtsabhängige Signal ein Zählwert sein, der pro Auslösevorgang inkrementiert wird.

Die Insektenfalle kann beispielsweise einen Auffangbehälter für die gefangenen Insekten aufweisen, wobei das gewichtsabhängige Signal von einem Gewicht von gefangenen Insekten in dem Auffangbehälter abhängt, wobei die Auslöseeinheit dazu eingerichtet ist, den Auffangbehälter in der Auswurfstellung des Schwenkarms zu entleeren. Der Auffangbehälter kann beispielsweise am Schwenkarm befestigt sein. Der Auffangbehälter kann beispielsweise dazu eingerichtet sein, Insekten, die in die Insektenfalle gelangen, beispielsweise indem sie durch Fangschlitze in die Falle eindringen, aufzufangen. Beispielsweise kann der Auffangbehälter unterhalb der Fangschlitze angeordnet sein.

Die Insektenfalle kann eine Windabfangeinheit aufweisen, wobei die Windabfangeinheit dazu eingerichtet ist, zumindest den Auffangbehälter vor Wind zu schützen. Die Windabfangeinheit kann beispielsweise Ablenkelemente aufweisen, die Wind, der beispielsweise durch die Fangschlitze in die Insektenfalle gelangt, so ablenken, dass der Wind nicht auf den Auffangbehälter (insbesondere einen Innenraum des Auffangbehälters) trifft. Die Ablenkelemente können so angeordnet sein, dass Insekten, die gegebenenfalls auf die Ablenkelemente treffen, aufgrund der Gravitation dennoch in den Auffangbehälter gelangen. Durch die Windabfangeinheit wird ein dynamischer Druck auf den Schwenkarm aufgrund von Wind zumindest abgeschwächt oder gänzlich verhindert. Mittels der Windabfangeinheit können daher etwaige Fehlzählungen aufgrund von Windstößen, die zu einem Auslösen der Auslöseeinheit führen könnten, verhindert oder reduziert werden. Die Windabfangeinheit kann daher die Zuverlässigkeit der Insektenfalle und der damit gewonnenen Daten verbessern.

Die Windabfangeinheit kann beispielsweise eine Windabfangeinheit-Außenwand aufweisen, wobei die Windabfangeinheit-Außenwand zumindest abschnittsweise luftdurchlässig, insbesondere gitterförmig und/oder porös, ausgeführt ist. Beispielsweise kann die Windabfangeinheit-Außenwand Öffnungen aufweisen, durch die Luft dringen kann (nicht aber die gefangenen Insekten). Dringt beispielsweise Wind in die Windabfangeinheit ein, kann der Wind über die Windabfangeinheit-Außenwand abgeleitet werden. Damit kann ein dynamischer Druck aufgrund von Wind, der anderenfalls auf den Schwenkarm wirken könnte, verhindert werden und somit die Zuverlässigkeit der Insektenfalle weiter verbessert werden.

Der Auffangbehälter kann beispielsweise eine untere Entleeröffnung zum Entleeren des Auffangbehälters aufweisen, wobei die Auslöseeinheit, insbesondere der Schwenkarm, ein Verschlusselement zum Verschließen der unteren Entleeröffnung aufweist, wobei das Verschlusselement die untere Entleeröffnung in der Sammelstellung des Schwenkarms verschließt, wobei die untere Entleeröffnung in der Auswurfstellung des Schwenkarms frei vorliegt, sodass der Auffangbehälter in der Auswurfstellung entleert wird. Die Entleeröffnung kann an einem tiefsten Punkt der Auffangbehälters angeordnet sein, sodass gefangene Insekten aufgrund der Gravitation durch die untere Entleeröffnung aus dem Auffangbehälter ausgeworfen werden. Das Verschlusselement kann beispielsweise eine Platte aufweisen oder sein, die mit dem Schwenkarm verbunden ist oder Teil des Schwenkarms ist. In der Sammelstellung des Schwenkarms verschließt das Verschlusselement die untere Entleeröffnung. In der Auswurfstellung des Schwenkarms liegt die untere Entleeröffnung frei vor, sodass gefangene Insekten aus dem Auffangbehälter ausgeworfen werden. Das Gewicht der im Auffangbehälter gefangenen Insekten wirkt auf das Verschlusselement und folglich auf den Schwenkarm.

Beispielsweise kann der Schwenkarm um eine horizontale Achse schwenkbar sein, wobei der Schwenkarm ein erstes Ende und ein zweites Ende aufweist, wobei der Schwenkarm zwischen dem ersten Ende und dem zweiten Ende in der Art einer Wippe gelagert ist, wobei das Gewicht der gefangenen Insekten auf ein erstes Ende des Schwenkarms wirkt, wobei das zweite Ende des Schwenkarms das Gegengewicht aufweist. Beispielsweise kann das Verschlusselement am ersten Ende des Schwenkarms angeordnet sein oder Teil des ersten Endes des Schwenkarms sein. Das Gegengewicht ist am zweiten Ende des Schwenkarms angeordnet sein oder Teil des zweiten Endes des Schwenkarms sein. Der Schwenkarm kann beispielsweise mittig zwischen dem ersten Ende und dem zweiten Ende gelagert sein. Bei Erreichen des vordefinierten Gewichts gefangener Insekten auf das erste Ende des Schwenkarms löst die Auslöseeinheit aus. Der Schwenkarm wird von der Sammelstellung in die Auswurfstellung übergeführt, wodurch die untere Entleeröffnung freigegeben wird und folglich die gefangenen Insekten aus dem Auffangbehälter und aus der Insektenfalle fallen (d.h. ausgeworfen werden). Diese Ausführungsform ist besonders einfach und mechanisch besonders robust.

Die Sensoreinheit kann dazu eingerichtet sein, eine Auswurfstellung und/oder eine Sammelstellung des Schwenkarms zu detektieren und einen Datenpunkt aufzunehmen. Beispielsweise kann die Sensoreinheit dazu eingerichtet sein, die Stellung des Schwenkarms zu detektieren. Beispielsweise kann die Sensoreinheit dazu eingerichtet sein, die Auswurfstellung des Schwenkarms zu detektieren, wobei die Auswurfstellung immer dann vorliegen kann, wenn keine Sammelstellung vorliegt. Beispielsweise kann die Sensoreinheit dazu eingerichtet sein die Stellung des Schwenkarms in regelmäßigen Intervallen und/oder durch eine Abfrage des Benutzers zu ermitteln, um Störungen, wie beispielsweise ein dauerhaftes Vorliegen der Auswurfstellung des Schwenkarms zu detektieren.

Die Sensoreinheit kann dazu eingerichtet sein, zumindest bei einer Änderung der Stellung des Schwenkarms einen Datenpunkt aufzunehmen. Beispielsweise kann die Sensoreinheit dazu eingerichtet sein, einen Datenpunkt aufzunehmen, wenn der Schwenkarm von der Sammelstellung in die Auswurfstellung übergeführt wird, und einen weiteren Datenpunkt aufzunehmen, wenn der Schwenkarm wiederum aus der Auswurfstellung in die Sammelstellung übergeführt wird. Die Sensoreinheit kann dazu eingerichtet sein, insbesondere Änderungen der Stellung des Schwenkarms zu detektieren. Ein Auslösevorgang kann in diesem Fall beispielsweise zur Aufnahme von zumindest zwei Datenpunkten führen, wobei ein Datenpunkt aufgenommen wird, wenn der Schwenkarm von der Sammelstellung in die Auswurfstellung übergeführt wird, und ein weiterer Datenpunkt aufgenommen wird, wenn der Schwenkarm von der Auswurfstellung zurück in die Sammelstellung geführt wird. Durch die Aufnahme von Datenpunkten bei einer Zustandsänderung der Stellung des Schwenkarms kann die Stellung des Schwenkarms besonders einfach überwacht werden.

Die Sensoreinheit kann einen Näherungssensor aufweisen, wobei die Sensoreinheit dazu eingerichtet ist, eine Annäherung des Schwenkarms an den Näherungssensor zu detektieren. Der Näherungssensor (engl. "proximity sensor") kann beispielsweise ein Näherungsschalter sein. Der Näherungssensor kann beispielsweise ein induktiver, ein kapazitiver, ein magnetischer, und/oder ein optischer, insbesondere ein optischer Infrarot-, Sensor sein. Beispielsweise kann der Näherungssensor ein Reedschalter und/oder ein Reed-Relais aufweisen. Der Näherungssensor kann dazu eingerichtet sein einen Kontakt mit dem Schwenkarm in dessen Auswurfstellung oder Sammelstellung zu detektieren. Der Schwenkarm, vorzugsweise das zweite Ende des Schwenkarms, kann beispielsweise in der Sammelstellung des Schwenkarms näher an dem Näherungssensor sein als in der Auswurfstellung.

Die Auslöseeinheit kann ein Einstellelement zur Einstellung des vordefinierten Gewichts aufweisen. Das vordefinierte Gewicht kann beispielsweise je nach erwarteter Population an Insekten und/oder je nach Typ der Insekten und damit erwartetem mittleren Gewicht eines Insekts angepasst werden Beispielsweise kann das vordefinierte Gewicht dem mittleren Gewicht einiger weniger Insekten, beispielsweise in etwa dem 10-fachen des mittleren Gewichts eines Insekts, entsprechen oder darunter liegen, um einen erstmaligen Befall eines Gebiets besonders sensitiv erfassen zu können. Beispielsweise kann bei einem wenig ausgeprägten Befall das vordefinierte Gewicht niedriger eingestellt werden als bei einem starken Befall.

Das Einstellelement kann beispielsweise einen Magneten und ein Gegenelement aufweisen, wobei zwischen dem Magnet und dem Gegenelement eine einstellbare Kraft wirkt, wobei die einstellbare Kraft auf den Schwenkarm wirkt. Die einstellbare Kraft wirkt der Gewichtskraft der gefangenen Insekten entgegen. Mit anderen Worten hält die einstellbare Kraft (gemeinsam mit dem Gegengewicht) den Schwenkarm in der Sammelstellung. Wird das vordefinierte Gewicht durch das Gewicht der gefangenen Insekten überschritten, wird die einstellbare Kraft (samt der Kraft aufgrund des Gegengewichts) überwunden, wodurch die Auslöseeinheit auslöst und der Schwenkarm von der Sammelstellung in die Auswurfstellung übergeführt wird. Beispielsweise kann der Magnet am oder im zweiten Ende des Schwenkarms angeordnet sein. Beispielsweise kann das Gegenelement an einem Gehäuse der Auslöseeinheit angeordnet sein. Alternativ kann das Gegenelement am oder im zweiten Ende des Schwenkarms angeordnet sein. Das Gegenelement kann beispielsweise einen weiteren Magneten aufweisen oder (durch den Magneten) magnetisierbar sein.

Beispielsweise kann ein Abstand zwischen dem Magneten und dem Gegenelement, beispielsweise mittels einer Einstellschraube, einstellbar sein. Beispielsweise kann das Gegenelement an der Einstellschraube angeordnet sein oder ein Teil der Einstellschraube, beispielsweise ein Kopf der Einstellschraube, sein. Je kleiner der Abstand zwischen der Schraube und dem Gegenelement (in der Sammelstellung des Schwenkarms) ist, desto höher ist die (eingestellte) einstellbare Kraft. Je größer der Abstand ist, desto kleiner ist die (eingestellte) einstellbare Kraft. Der Magnet kann in der Auswurfstellung des Schwenkarms so weit vom Gegenelement entfernt sein, dass im Wesentlichen keine Kraft zwischen dem Magneten und dem Gegenelement wirkt.

Gemäß einer optionalen Ausführungsform kann die Insektenfalle ein Fallrohr aufweisen, wobei das Fallrohr derart angeordnet ist, das gefangene Insekten nach dem Auslösen der Auslöseeinheit durch das Fallrohr fallen, wobei das Fallrohr optional ein Kontaktgift zur Euthanasierung der gefangenen Insekten aufweist. Das Fallrohr kann beispielsweise unter dem Auffangbehälter angeordnet sein, sodass aus dem Auffangbehälter ausgeworfene Insekten durch das Fallrohr fallen. Um zu verhindern, dass einmal gefangenen Insekten nach einer Entleerung erneut gefangen werden und somit die Daten gegebenenfalls verfälscht werden, und um zu vermeiden, dass sich freigelassene Insekten vermehren, kann das Kontaktgift vorgesehen sein. Das Kontaktgift kann die Insekten beispielsweise innerhalb einiger Minuten euthanasieren, damit freigelassene Insekten nicht ausschließlich in der direkten Umgebung verenden und weitere Insekten durch den Verwesungsgeruch der euthanasierten Insekten von der Insektenfalle ferngehalten werden. Als Kontaktgift kann beispielsweise ein Pilz oder Pilze verwendet werden, z.B. zumindest ein insektenschädigender Pilz (entomopathogener Pilz) und/oder ein Pilz, der Substanzen produziert, die für Insekten giftig sind (Pilze mit toxischen Metaboliten). Die Auswahl des Pilzes oder der Pilze wird die Fachperson auf Basis der zu fangenden Insekten geeignet treffen. Der eingesetzte Pilz kann dementsprechend mit dem eingesetzten Lockstoff/Pheromon abgestimmt sein, sodass der Pilz z.B. spezifisch für jene Insekten schädlich ist, die vom Lockstoff angelockt werden. Die angelockten und zumindest vorübergehend gefangenen Insekten können mit einem Pilz beaufschlagt werden (z.B. durch Kontakt oder mit einer Sporenlösung). Dieser Pilz kann in weiterer Folge verschleppt werden und zum Absterben von Insekten in allen Lebensstadien führen. Ganz allgemein und unabhängig vom Vorhandensein eines Fallrohrs kann die Insektenfalle eingerichtet sein, um lebende Insekten wieder zu entlassen oder auszuwerfen (als "Catch and Release"-System, d.h. die noch lebenden Insekten dürfen wieder entweichen). Ein Pilz oder generell ein Kontaktgift kann grundsätzlich an einem beliebigen Ort in der Falle auf die - in diesem Fall nur vorübergehend - gefangenen Insekten aufgebracht werden, mit den oben beschriebenen Effekten.

Die Insektenfalle kann darüber hinaus mit einem Sendemodul ausgestattet sein, um Daten der Sensoreinheit beispielsweise an einen Server und/oder ein Endgerät eines Benutzers, beispielsweise mittels einer Funkverbindung, zu übertragen.

Die Insektenfalle kann einen Energiespeicher, wie beispielsweise einen Akku, aufweisen, um die Sensoreinheit und/oder das Sendemodul mit (elektrischer) Energie zu versorgen. Die Insektenfalle kann beispielsweise ein Photovoltaik(PV)-Modul aufweisen, um elektrische Energie zur Versorgung der Sensoreinheit und/oder des Sendemoduls zu erzeugen. Beispielsweise kann die Insektenfalle im Wesentlichen autark sein.

Beispielhaft wird die Erfindung anhand verallgemeinerter Ausführungsbeispielen beschrieben.

Eine Ausführungsform der Insektenfalle betrifft eine Vorrichtung des Projekts "BORKY". BORKY möchte im Speziellen mit seinem System die Herausforderung des Monitorings von Schadinsekten ansprechen. Das System generiert Wert durch die Zeitersparnis, da der Förster oder Waldarbeiter nicht mehr wöchentlich alle Borkenkäferfallen überprüfen muss. Die almost-real-time Applikation bietet einen Zeitvorsprung gegenüber der Ausbreitung der Borkenkäfer. Herkömmliche Erfassungsmethoden beinhalten die manuelle Zählung der Käfer und können daher teilweise nur wöchentlich überprüft werden. Dies führt bei einem in der Praxis üblichen Ausleseintervall zu einem Zeitverlust von bis zu sieben Tagen.

Die Erfindung betrifft eine Vorrichtung für das Insektenmonitoring (d.h. eine Insektenfalle zur Bestimmung einer Anzahl gefangener Insekten). Die Ergebnisse können per Long Range Wide Area Network (LoRaWAN) über weite Strecken übertragen werden. Diesbezüglich kann ein bereits bestehendes oder selbst errichtetes LoRaWAN-Netzwerk genutzt werden. Die Informationen können in Form von GIS (Geoinformationssystem) verständlich für Anwender dargestellt werden. Zudem kann die Anwendbarkeit flexibel auf unterschiedliche Bedürfnisse angepasst werden, da das System modular aufgebaut werden kann. Dies bringt den Vorteil, große Flächen abzudecken. Über die Vernetzung auf weitreichenden Gebieten können zudem Handlungsempfehlungen auf regionaler Ebene sowie auf Betriebsebene ausgesprochen werden, um zum Beispiel Kleinwaldbesitzer auf ein drohendes Befallsrisiko aufmerksam zu machen.

Letztens wird ein naturnaher Ansatz verfolgt. Mithilfe der Erfindung können die Erhaltung der Wälder und ihrer Funktionen sichergestellt werden. Dies zeigt sich speziell in der von BORKY selbst designten Hardwarekomponente, wobei die Euthanasie der Käfer, durch der Zähleinheit nachgeschalteten Maßnahmen, mitberücksichtigt werden kann. Mit den steigenden Temperaturen und dem Voranschreiten des Klimawandels hat sich der vermehrt auftretende Befall von Nutzpflanzen durch Insekten zu einem weltweiten Problem entwickelt. Dabei ist ein Vorteil der Monitoringlösung (nachfolgend als "BORKY-Box" bezeichnet), dass das Lock-Pheromon und die Einflugschneise an verschiedene Insektenarten angepasst werden kann und das System demnach auf verschiedene Insektenarten anwendbar ist. Das Insekten-Erfassungssystem bietet eine leichte Handhabung und kann zusätzlich eine große Monitoring-Fläche abdecken. Zudem kann die Datenerhebung autonom erfolgen, ohne manuelle Fallenkontrolle durch den Kunden. Diese Zeitersparnis kann in die vom System generierten Handlungsempfehlungen investiert werden, im Falle des Borkenkäfers bleibt somit mehr Zeit die befallenen Bäume im Wald zu finden. Gemäß den Wünschen der Anwender kann die Infrastruktur zur Datenübertragung beliebig erweitert und mit zusätzlicher Sensorik versehen werden. Die Kombination mit weiteren Datenquellen, wie zum Beispiel Wetterdaten, ermöglicht eine bessere Risikobewertung.

Die aktuelle Methode, um den Befall eines Waldgebietes durch den Borkenkäfer zu überblicken, wird mittels einfacher Pheromon-Fallen abgewickelt. Diese Fallen werden besonders zu Hochzeiten des Befalls, bis zu zweimal wöchentlich durch Forstpersonal abgefahren und manuell ausgezählt. Diese Methode ist zeit- und kostenintensiv, sowie ungenau. Die Zahl der Käfer wird dabei über das Volumen in einem Messbecher ermittelt. Die kleinste zeitliche Auflösung ist vom Ausleseintervall abhängig.

Das Käfer-Erfassungssystem kann in die Branche der Forst- und Waldwirtschaft eingegliedert werden, mit Potenzial für weitere Anwendungen in der Agrarwirtschaft. Aktuell gibt es kein Produkt, welches diese Attribute aufweist. Es bestehen zur Zeit Substitutionsprodukte, wie beispielsweise ein Bienen-Zählsystem, welches mit Lichtschranke oder Laser funktioniert. Sowie weitere Insektenfallen, die oftmals auf elektronischer Euthanasierung basieren und somit mehr Strom benötigen.

Eine Aufgabe des Monitoringsystems ist es, die Ergebnisse bezüglich des Schwarmverhaltens zeitnah zu übermitteln. Dabei sollen zum einen Kosten- und Zeitersparnis, sowie aussagekräftige Informationen und entsprechende Handlungsoptionen das Ziel sein. Somit kann das System in bereits bestehende Fallenkörper implementiert werden. Anschließend können die Insekten beim Verlassen des Fallenkörpers euthanasiert werden. Diese Maßnahme ist gegebenenfalls notwendig, um den Verwesungsgeruch der sich ansammelnden Insekten zu vermeiden da ansonsten der Geruch des Pheromons in der Falle nach gewisser Zeit überdeckt werden kann. Zudem soll es zu keiner erneuten Zählung des Insektes kommen, ebenso wie ein Befall stehender Bäume durch das bereits gezählte Insekt.

Das Besondere an dem Insekten-Erfassungssystem ist, dass es ein autonomes Monitoring des Insektenbefalls ermöglicht. Bei einem teilweise unwegsamen Gebiet mit geringer Netzabdeckung, wie dem Wald, ist die Art der Datenübertragung entscheidend. Sobald das System eine kritische Menge an Insekten gesammelt hat, wird ein LoRaWAN-Sensor ausgelöst, sendet seine Information an ein Gateway und anschließend an den Anwender. Der Vorteil an LoRaWAN ist nicht nur die einfache Datenübertragung, sondern, dass ohne Probleme weitere Sensorik für Temperatur, Windgeschwindigkeit, Luftfeuchte oder Verdunstung mit eingegliedert werden können. Somit kann das System an die individuellen Messbedingungen angepasst und auch auf weitere Insektenarten übertragen werden. Eine weitere Besonderheit des Systems ist die automatische Insektenentsorgung, um einem Verwesungsgestank vorzubeugen. Ab einem kritischen Füllstand leert sich die Falle und die Insekten fallen unten und bei Bedarf euthanasiert heraus.

Das System soll ein weltweites Problem hinsichtlich des Monitorings von Schadinsekten angehen. Zusätzlich soll die vernetzte Datensammlung auf lokaler und regionaler Ebene zum Insektenbefall ohne großen Aufwand ermöglicht werden.

Mithilfe des Insekten-Erfassungssystems kann extremem Befall durch Insekten entgegengewirkt werden - da die Anwender in ihren Bestrebungen, befallene Gebiete zu finden, unterstützt werden. Im Fall des Borkenkäfers kann das System zum Schutz des Ökosystems Wald beitragen. Dies wiederum führt zu einer CO₂-Senke des Waldes und kann somit die Wohlfahrtsfunktion erhalten und verbessern. Gleichzeitig kann durch den Erhalt von Waldfläche das CO₂-Speicherpotenzial erhöht werden. Mittels nachhaltiger Waldbewirtschaftung in den beobachteten Gebieten kann weiterhin die Holzindustrie beliefert werden und zudem die Nutzfunktion des Waldes auch für zukünftigen Generationen sichergestellt werden. Dabei ist nicht nur das Holz als nachwachsender Rohstoff wichtig, sondern auch die Wirkung des Waldes als Erholungsraum für Besucher. Das System ermöglicht es, die Anpassungsfähigkeit des Waldes an die Klimaveränderungen zu beobachten und nach Möglichkeit zu verbessern.

Einige Alleinstellungs- sowie Neuheitsmerkmale des Insektenmonitorings sind zum einen der modulare Aufbau, welcher den Entfall des Sammelbehälters ermöglicht. Zum anderen liegt auch Neuheit im Zählmechanismus des Systems basierend auf einem gewichtsabhängigen Signal, und beispielsweise entsprechend einer Ausführungsform mit einer Messwippe (d.h., einem entsprechend gelagerter Schwenkarm) mit einstellbarem Auslösegewicht. Zudem führt optional die Art der Euthanasie und Entsorgung der Käfer zur Vermeidung eines Verwesungsgeruches, einer wiederholten Zählung oder weiterem Befall durch das Insekt. Ebenso vorteilhaft kann die Übertragbarkeit auf andere Anwendungsfälle beim Monitoring von Schadinsekten in der Land- und Forstwirtschaft vermieden werden.

Die Ausführungsbeispiele betreffen eine Insektenfalle, insbesondere Borkenkäferfalle, zur Bestimmung einer Anzahl gefangener Insekten, insbesondere gefangener Borkenkäfer, mit einer Sensoreinheit, dadurch gekennzeichnet, dass die Sensoreinheit dazu eingerichtet ist, zur Bestimmung der Anzahl der gefangenen Insekten ein gewichtsabhängiges Signal zu erfassen, wobei das gewichtsabhängige Signal von einem Gewicht der gefangenen Insekten abhängig ist.

Die Insektenfalle kann dazu eingerichtet sein, lediglich oder zumindest bevorzugt Insekten einer bevorzugten Insektenart (beispielsweise Borkenkäfer) anzuziehen und/oder zu fangen. Beispielsweise kann das durchschnittliche Gewicht eines Insekts der bevorzugten Insektenart bekannt sein. Beispielsweise kann somit aus dem gewichtsabhängigen Signal, das von dem Gewicht der gefangenen Insekten abhängt, die Anzahl an gefangenen Insekten ermittelt werden.

Beispielsweise kann die Insektenfalle einen Auffangbehälter für gefangene Insekten aufweisen, wobei das gewichtsabhängige Signal von einem Gewicht von gefangenen Insekten in dem Auffangbehälter abhängt.

Beispielsweise kann die Insektenfalle dazu eingerichtet sein, den Auffangbehälter bei Erreichen eines vordefinierten Gewichts an gefangenen Insekten im Auffangbehälter zu entleeren. Das vordefinierte Gewicht kann einstellbar oder konfigurierbar sein.

Durch das (automatische) Entleeren des Auffangbehälters, kann beispielsweise auf einen etwaigen größeren Sammelbehälter zur längerfristigen Lagerung von gefangenen Insekten verzichtet werden.

Das gewichtsabhängige Signal kann beispielsweise ein zeitdiskretes Signal mit Datenpunkten sein, wobei bei einer Entleerung des Auffangbehälters ein Datenpunkt aufgenommen wird. Beispielsweise können nur bei Entleerungen Datenpunkte aufgenommen werden. Beispielsweise kann ein Datenpunkt genau einer Entleerung entsprechen.

Optional kann der Auffangbehälter eine untere Entleeröffnung zum Entleeren des Auffangbehälters aufweisen, wobei die Insektenfalle eine Auslöseeinheit mit einem Verschlusselement zum Verschließen der unteren Entleeröffnung aufweist, wobei das Verschlusselement eine Schließstellung (entspricht einer Sammelstellung) und eine Offenstellung (entspricht einer Auswurfstellung) aufweist, wobei das Verschlusselement in der Schließstellung die untere Entleeröffnung verschließt, wobei die untere Entleeröffnung in der Offenstellung des Verschlusselements frei vorliegt, sodass der Auffangbehälter in der Offenstellung des Verschlusselements entleert wird, wobei die Auslöseeinheit dazu eingerichtet ist bei dem vordefinierten Gewicht auszulösen und das Verschlusselement von der Schließstellung in die Offenstellung überzuführen, wobei das vordefinierte Gewicht auf das Verschlusselement wirkt.

Beispielsweise kann die Auslöseeinheit einen mit dem Verschlusselement verbundenen Schwenkarm aufweisen, um das Verschlusselement von der Schließstellung in die Offenstellung zu schwenken.

Optional kann die Auslöseeinheit ein Gegengewicht aufweisen, wobei die Auslöseeinheit dazu eingerichtet ist, nach einer Entleerung des Auffangbehälters das Verschlusselement aufgrund des Gegengewichts von der Offenstellung in die Schließstellung zurückzuführen.

Beispielsweise kann der Schwenkarm um eine horizontale Achse schwenkbar sein, wobei der Schwenkarm ein erstes Ende und ein zweites Ende aufweist, wobei der Schwenkarm zwischen dem ersten Ende und dem zweiten Ende in der Art einer Wippe gelagert ist, wobei das Verschlusselement an einem ersten Ende des Schwenkarms angeordnet ist, wobei das zweite Ende des Schwenkarms das Gegengewicht aufweist.

Die Sensoreinheit kann dazu eingerichtet sein, eine Offenstellung des Verschlusselements anhand einer Stellung des Schwenkarms zu detektieren und einen Datenpunkt aufzunehmen.

Die Sensoreinheit kann ein Kontaktelement aufweisen, wobei die Sensoreinheit dazu eingerichtet ist, einen Kontakt des Kontaktelements mit dem Schwenkarm zu detektieren, wobei der Schwenkarm, vorzugsweise das zweite Ende des Schwenkarms, in der Offenstellung des Verschlusselements in Kontakt mit der Kontakteinheit ist.

Die Auslöseeinheit kann beispielsweise ein Einstellelement zur Einstellung des vordefinierten Gewichts aufweisen.

Das Einstellelement kann beispielsweise einen Magneten aufweisen, wobei der Magnet eine einstellbare Kraft auf das Verschlusselement bewirkt.

Beispielsweise kann die Insektenfalle eine Schlitzfalle mit Fangschlitzen zum Fangen von Insekten aufweisen, wobei der Auffangbehälter unter der Schlitzfalle angeordnet ist, sodass die gefangenen Insekten in den Auffangbehälter fallen.

Beispielsweise kann eine Windabfangeinheit, insbesondere mit zumindest einem Windstopper, vorgesehen sein, wobei die Windabfangeinheit über dem Auffangbehälter angeordnet ist.

Optional kann eine Regenableitung vorgesehen sein, wobei die Regenableitung dazu eingerichtet ist, einen Eintritt von Regenwasser in den Auffangbehälter zu verhindern.

Die Insektenfalle kann beispielsweise ein Fallrohr aufweisen, wobei das Fallrohr derart angeordnet ist, das gefangenen Insekten nach der Entleerung des Auffangbehälters durch das Fallrohr fallen, wobei das Fallrohr optional ein Kontaktgift zur Euthanasierung der gefangenen Insekten aufweist.

Die Ausführungsbeispiele betreffen weiters ein Verfahren zur Bestimmung einer Anzahl gefangener Insekten, insbesondere gefangener Borkenkäfer, mit einer Insektenfalle nach einem der vorhergehenden Ausführungsbeispiele, mit den Schritten:
- Fangen von Insekten mittels der Insektenfalle;
- Erfassen eines gewichtsabhängigen Signals, wobei das gewichtsabhängige Signal von einem Gewicht der gefangenen Insekten abhängig ist;
- Ermitteln einer Anzahl an gefangenen Insekten aus dem gewichtsabhängigen Signal.

Optional kann zumindest eine Wiederholung der beiden weiteren Schritte vorgesehen sein:
- Auffangen von gefangenen Insekten in einem Auffangbehälter der Insektenfalle;
- Entleeren des Auffangbehälters bei Erreichen eines vordefinierten Gewichts an Insekten im Auffangbehälter;
Wobei das gewichtsabhängige Signal ein zeitdiskretes Signal mit Datenpunkten ist, wobei bei einer Entleerung des Auffangbehälters ein Datenpunkt aufgenommen wird.

Die Anzahl an gefangenen Insekten kann beispielsweise direkt proportional zu der Anzahl an Entleerungen sein. Die Anzahl an Entleerungen kann exakt der Anzahl an Datenpunkten des zeitdiskreten Signals sein. Beispielsweise kann daher die Anzahl an gefangenen Insekten direkt proportional der Anzahl an Datenpunkten des gewichtsabhängigen (und zeitdiskreten) Signals sein.

Die vorliegenden Ausführungsbeispiele und die vorliegende Erfindung wird anhand von den in den Zeichnungen dargestellten Ausführungsformen weiter erläutert. Die Erfindung soll nicht auf die dargestellten Ausführungsformen eingeschränkt sein.

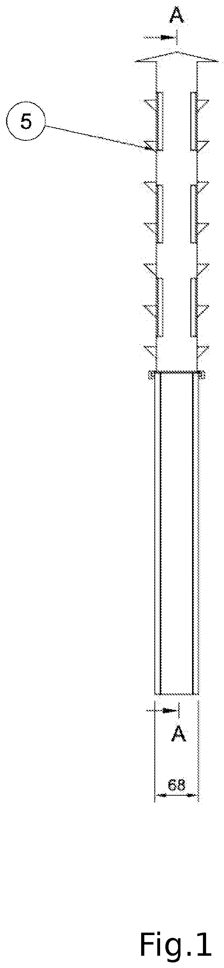

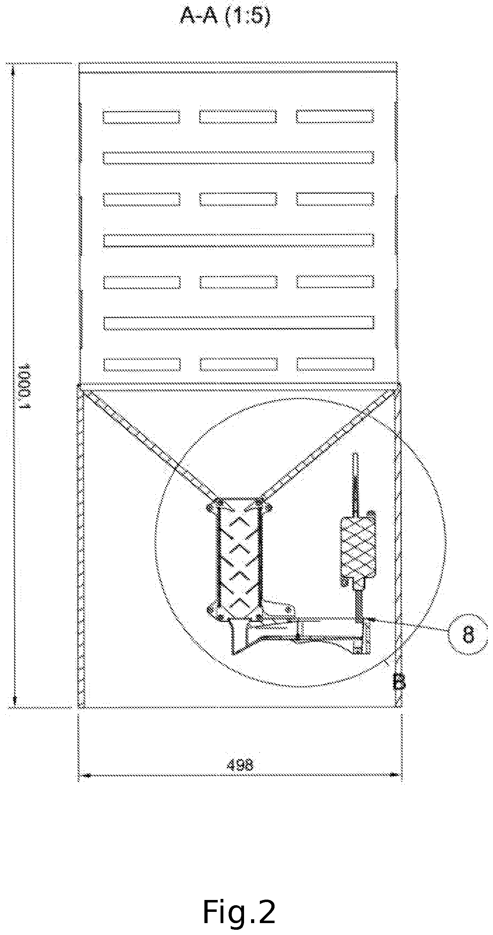

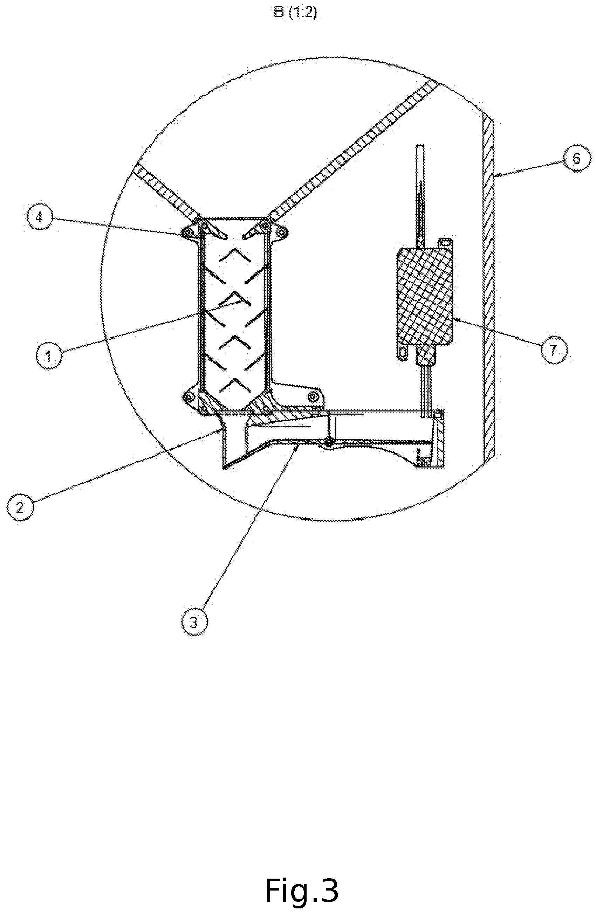

Die in den Figuren 1 bis 3 schematisch dargestellte Lösung (BORKY-Box) stellt ein teilautonomes Borkenkäfermonitoring-System dar und betrifft insbesondere die Ausführungsbeispiele 1 bis 15. Der Zählmechanismus (basierend auf dem gewichtsabhängigen Signal) für den Borkenkäfer kann beispielsweise in die bereits bestehenden Pheromon-Fallen implementiert werden. Dies ist in den Figuren des Prototypen schematisch und nummeriert dargestellt. Das System 8 (siehe B (1:2)) kann wie in Schnitt A-A (1:5) schematisch dargestellt unterhalb einer herkömmlichen Borkenkäferfalle implementiert werden und zusammen mit der herkömmlichen Borkenkäferfalle eine erfindungsgemäße Insektenfalle bilden. Die herkömmliche Borkenkäferfalle ist mit einem Pheromon versehen, welches die Borkenkäfer durch Fangschlitze 5 in den Innenraum der als Schlitzfalle ausgeführten Borkenkäferfalle lockt. Innerhalb der Falle ermüden die Tiere (d.h., die Insekten, in dieser beispielhaften Ausführungsform Borkenkäfer) nach gewisser Zeit und fallen mittels schräg gestellter Holzplatten in die Windabfangstation 4 (gelb dargestellt) des Zählsystems. Die Windabfangstation ist eine Ausführungsform einer Windabfangeinheit. Sowohl die Seitenplatten als auch die Applikation sind an dem äu-βeren Gehäuse 6 der herkömmlichen Borkenkäferfalle befestigt. Die Windabfangstation 4 ist mit Windstoppern 1 versehen, welche die Funktion haben, den Wind davon abzuhalten, die darunter liegende Wippe 3 (rot dargestellt) auszulösen.

Die Wippe 3 ist eine Ausführungsform eines Schwenkarms, wobei der Schwenkarm um eine horizontale Achse schwenkbar ist, wobei der Schwenkarm ein erstes Ende (links) und ein zweites Ende (rechts) aufweist, wobei der Schwenkarm zwischen dem ersten Ende und dem zweiten Ende in der Art einer Wippe gelagert ist, wobei ein Verschlusselement an einem ersten Ende des Schwenkarms angeordnet ist, wobei das zweite Ende des Schwenkarms das Gegengewicht aufweist.

Sobald die Borkenkäfer über die Windstopper nach unten fallen, sammeln sie sich in einer kleinen Kammer 2 () bis eine kritische Menge (d.h. ein vordefiniertes Gewicht an gefangenen Insekten, in diesem Fall Borkenkäfer) erreicht ist. Die Kammer 2 ist eine beispielhafte Ausführungsform eines Auffangbehälters. Diese Menge, d.h. das vordefinierte Gewicht, kann abhängig von Befall und Kundenwünschen mithilfe eines Einstellelements, in diesem Beispiel mittels eines Magneten, eingestellt werden. Nach Ansammlung der Käfer löst sich die Wippe (d.h. der Schwenkarm), welche mittig gelagert ist, vom Magneten. Dabei werden die Käfer nach unten (durch eine Entleeröffnung des Auffangbehälters, in diesem Beispiel der Kammer) entlassen, während die Wippe an ihrem Ende (d.h. am zweiten Ende) zu einem Auslösen bei dem LoRaWAN-Sensor 7 führt. Durch das Auslösen wird ein Datenpunkt des gewichtsabhängigen Signals aufgenommen. Das Signal wird über das Gateway an den Kunden geschickt bzw. der analytischen Datenverarbeitung im Internet zur Verfügung gestellt. Nach dem Öffnen (d.h. Entleeren) der Fangkammer wird die Entleeröffnung wieder durch die Wippe (d.h. durch ein Verschlusselement, in diesem Ausführungsbeispiel durch das erste (linke) Ende des Schwenkarms) verschlossen und es kann erneut gesammelt werden. Die Käfer fallen nach der Zählung in ein Fallrohr (nicht dargestellt), in welchem ein Kontaktgift angebracht werden kann. Je nach Euthanasierungsmethode können die Käfer nach Verlassen des Rohres noch einige Meter fliegen und anschließend auf natürliche Weise abgebaut werden.

Der Fangbehälter 2 (Auffangbehälter) weist eine untere Entleeröffnung zum Entleeren des Auffangbehälters auf, wobei die Insektenfalle eine Auslöseeinheit mit dem Verschlusselement zum Verschließen der unteren Entleeröffnung aufweist. Das Verschlusselement weist eine Schließstellung und eine Offenstellung auf, wobei das Verschlusselement in der Schließstellung (die in den Figuren dargestellt ist) die untere Entleeröffnung verschließt, wobei die untere Entleeröffnung in der Offenstellung (nicht dargestellt) des Verschlusselements frei vorliegt, sodass der Auffangbehälter in der Offenstellung des Verschlusselements entleert wird. Die Auslöseeinheit ist dazu eingerichtet bei dem vordefinierten Gewicht vordefinierten Gewicht an gefangenen Insekten im Auffangbehälter auszulösen und und das Verschlusselement von der Schließstellung in die Offenstellung überzuführen, und somit den Auffangbehälter zu entleeren. Das vordefinierte Gewicht wirkt dabei auf das Verschlusselement (in diesem Fall auf das erste Ende des Schwenkarms). Die Auslöseeinheit weist den mit dem Verschlusselement verbundenen Schwenkarm auf, um das Verschlusselement von der Schließstellung in die Offenstellung zu schwenken. In diesem Ausführungsbeispiel ist das Verschlusselement einteilig mit dem Schwenkarm ausgeführt. Das erste Ende des Schwenkarms ist demnach auch das Verschlusselement.

Um die Anzahl gefangener Insekten, in diesem Fall gefangener Borkenkäfer, mit der Insektenfalle zu bestimmen, werden die folgenden Schritte durchgeführt:
- Fangen von Insekten (in diesem Fall Borkenkäfern) mittels der Insektenfalle;
- Erfassen eines gewichtsabhängigen Signals, wobei das gewichtsabhängige Signal von einem Gewicht der gefangenen Insekten abhängig ist;
- Ermitteln einer Anzahl an gefangenen Insekten aus dem gewichtsabhängigen Signal.

In diesem Ausführungsbeispiel ist zumindest eine Wiederholung der beiden weiteren Schritte vorgesehen:
- Auffangen von gefangenen Insekten in dem Auffangbehälter (d.h. der Kammer 2) der Insektenfalle;
- Entleeren des Auffangbehälters bei Erreichen eines vordefinierten Gewichts an Insekten im Auffangbehälter;
Wobei das gewichtsabhängige Signal ein zeitdiskretes Signal mit Datenpunkten ist, wobei bei einer Entleerung des Auffangbehälters ein Datenpunt aufgenommen wird.

Fig. 4 zeigt schematisch eine seitliche Ansicht einer erfindungsgemäßen Insektenfalle;

Fig. 5 zeigt eine Schnittansicht A-A der Insektenfalle aus Fig. 4 samt einem Auffangbehälter, einer Auslöseeinheit und einer Sensoreinheit;

Fig. 6 zeigt eine Detailansicht B des Auffangbehälters, der Auslöseeinheit samt Einstellelement, und der Sensoreinheit aus Fig. 5;

Fig. 7 zeigt eine Detailansicht C eines Einstellelements der Auslöseeinheit aus Fig. 5;

Fig. 8 zeigt eine seitliche Schnittansicht D-D der Insektenfalle gemäß Fig. 5;

Fig. 9 zeigt die Detailansicht aus Fig. 6 mit dem Schwenkarm in der Auswurfstellung;

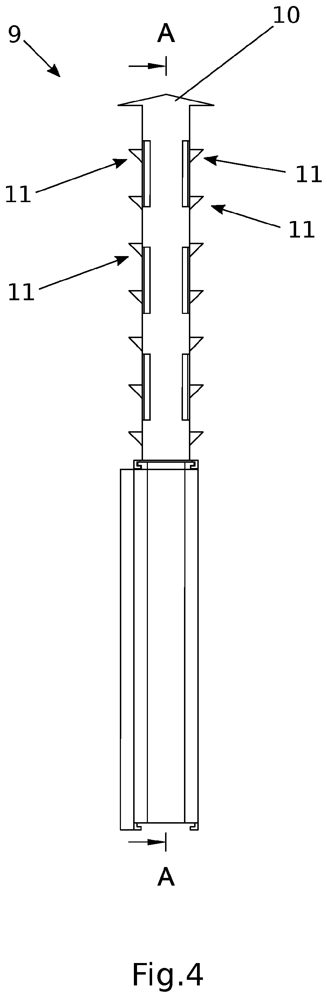

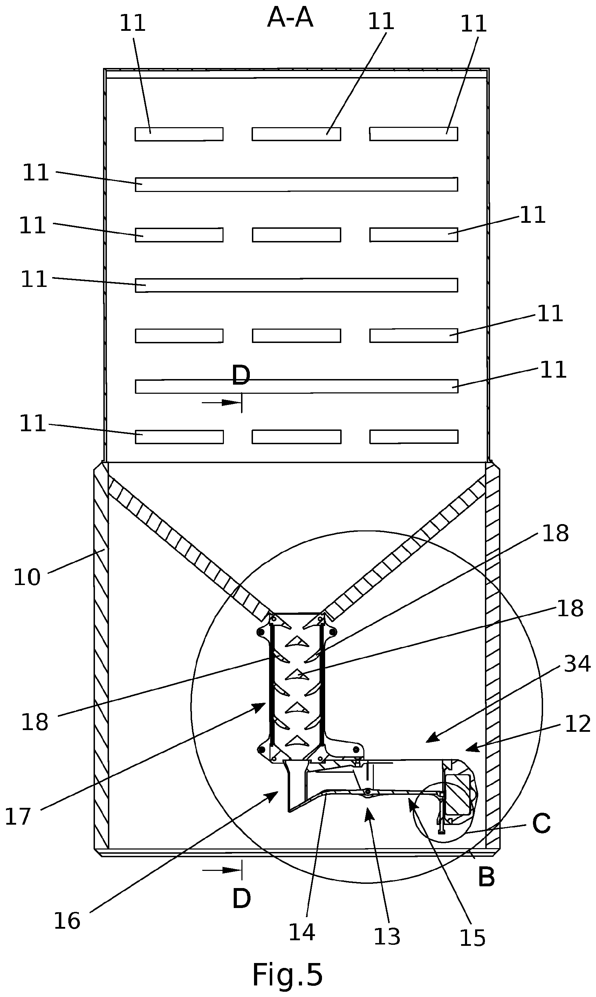

Figur 4 zeigt schematisch eine seitliche Ansicht einer Insektenfalle 9, in diesem Beispiel eine Borkenkäferfalle, zur Bestimmung einer Anzahl gefangener Insekten, in diesem Fall gefangener Borkenkäfer. Die Insektenfalle 9 weist ein Gehäuse 10 auf. Die Insektenfalle 9 ist als Schlitzfalle ausgebildet und weist Fangschlitze 11 (siehe auch Fig. 5) auf, durch die Borkenkäfer in das Gehäuse 10 gelangen können. Um gezielt Borkenkäfer anzulocken, weist die Insektenfalle 9 im Inneren entsprechende Pheromone auf.

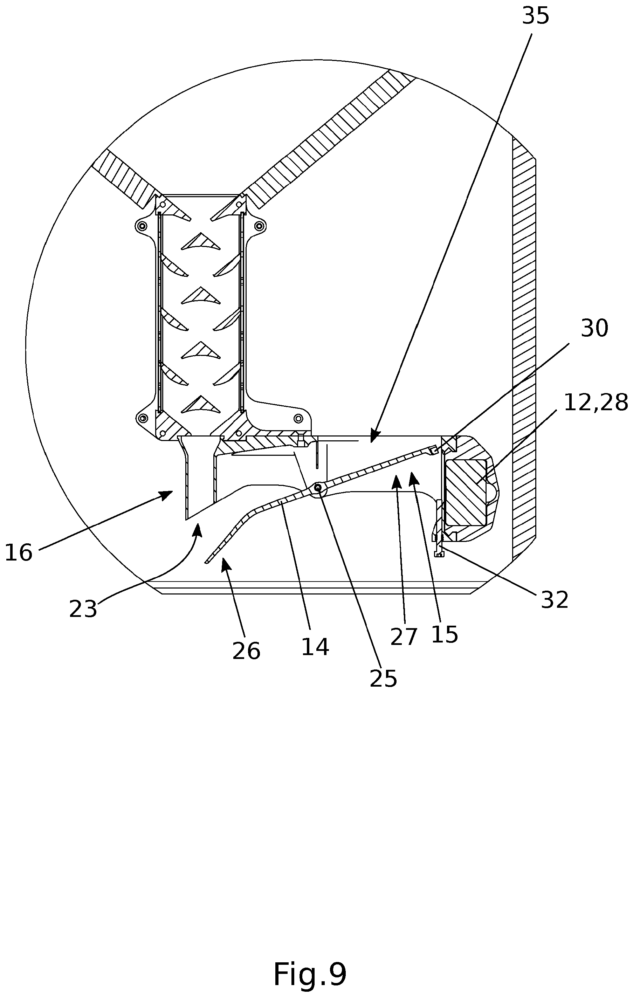

Figur 5 zeigt eine Schnittansicht A-A der Insektenfalle 9 aus Fig. 4. Die Insektenfalle 9 zur Bestimmung einer Anzahl gefangener Insekten weist eine Sensoreinheit 12 auf, wobei die Sensoreinheit 12 dazu eingerichtet ist, zur Bestimmung der Anzahl der gefangenen Insekten ein gewichtsabhängiges Signal zu erfassen. Das gewichtsabhängige Signal ist von einem Gewicht der gefangenen Insekten abhängig. Die Insektenfalle weist eine Auslöseeinheit 13 mit einem Schwenkarm 14 auf, wobei das Gewicht der gefangenen Insekten auf den Schwenkarm 14 wirkt. Die Auslöseeinheit 13 ist dazu eingerichtet, bei einem vordefinierten Gewicht auszulösen und den Schwenkarm 14 von einer Sammelstellung 34 in eine Auswurfstellung 35 (siehe Figur 9) überzuführen. Die Insektenfalle 9 ist dazu eingerichtet die gefangenen Insekten in der Auswurfstellung 35 des Schwenkarms 14 zumindest teilweise aus der Insektenfalle 9 zu entleeren. Die Auslöseeinheit 13 weist ein Gegengewicht 15 auf, wobei die Auslösseinheit 13 dazu eingerichtet ist, den Schwenkarm 14 aufgrund des Gegengewichts von der Auswurfstellung 35 in die Sammelstellung 34 zurückzuführen. Der Schwenkarm 14 ist in den Figuren 5, 6 und 7 jeweils in der Sammelstellung 34 dargestellt. Die Auswurfstellung 35 des Schwenkarms 14 ist in Figur 9 dargestellt.

Die Insektenfalle 9 weist einen Auffangbehälter 16 für die gefangenen Insekten auf, wobei das gewichtsabhängige Signal von einem Gewicht von gefangenen Insekten in dem Auffangbehälter 16 abhängt. Die Auslöseeinheit 13 ist dazu eingerichtet, den Auffangbehälter 16 in der Auswurfstellung 35 des Schwenkarms 14 zu entleeren.

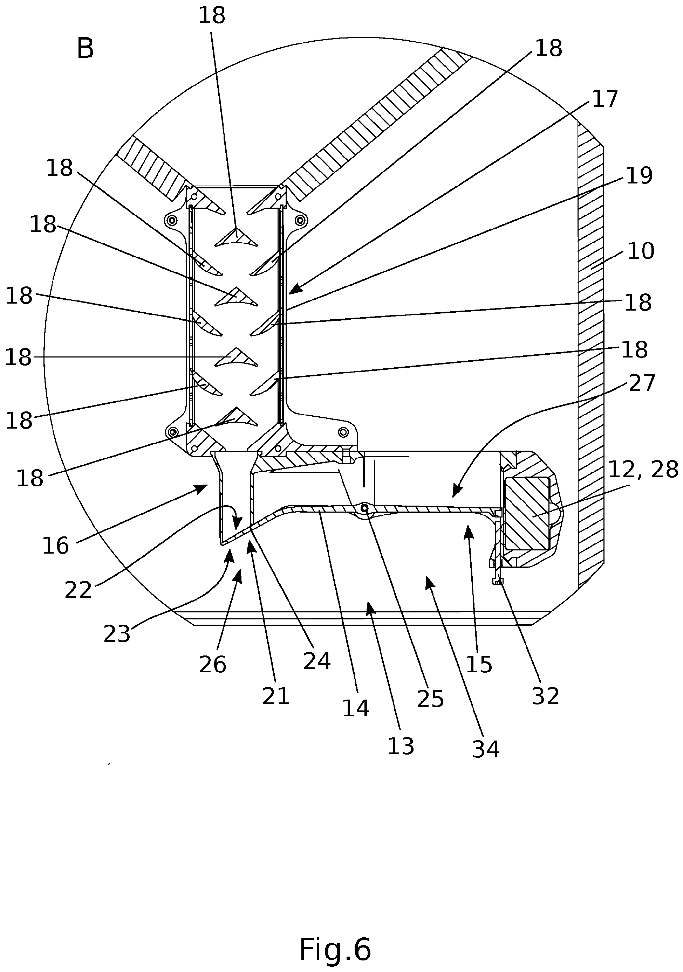

Über dem Auffangbehälter 16 ist eine Windabfangeinheit 17 angeordnet, die dazu eingerichtet ist, zumindest den Auffangbehälter 16 vor Wind zu schützen. Die Windabfangeinheit 17 weist Ablenkelemente 18 auf (siehe auch Figur 6), die Wind, der durch die Fangschlitze 11 in die Insektenfalle 9 gelangt, so ablenken, dass der Wind nicht in den Auffangbehälter 16 trifft. Die Ablenkelemente 18 sind so angeordnet, dass Insekten, die gegebenenfalls auf die Ablenkelemente 18 treffen, aufgrund der Gravitation dennoch in den Auffangbehälter 16 fallen.

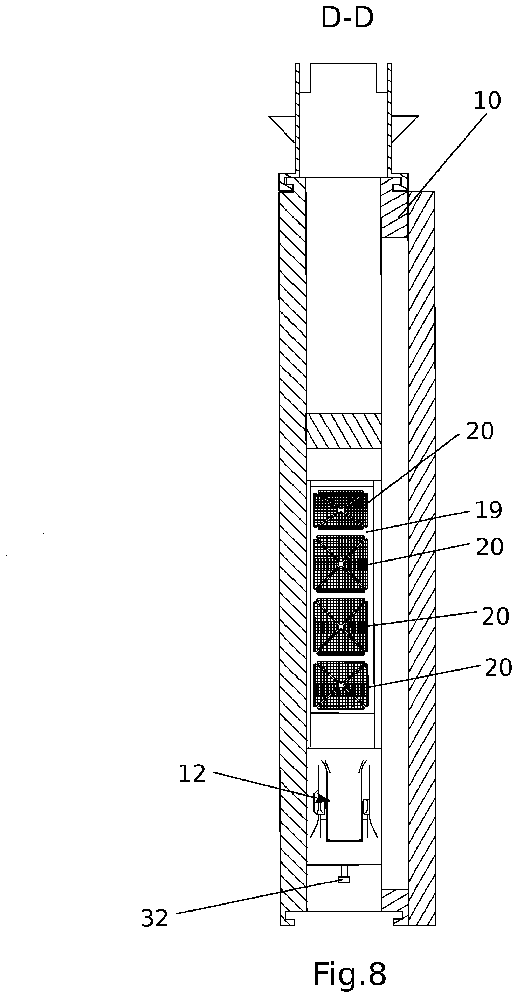

Die Windabfangeinheit 17 weist eine Windabfangeinheit-Außenwand 19 (siehe auch Figuren 6 und 8) auf, wobei die Windabfangeinheit-Außenwand 19 zumindest abschnittsweise luftdurchlässig, in diesem Beispiel gitterförmig, ausgeführt ist. Die Windabfangeinheit-Außenwand 19 weist dazu Gitter 20 auf (siehe Figur 8). Wind, der in die Windabfangeinheit 17 eindringt, kann somit über die Gitter 20 abgeleitet werden. Über die Gitter 20 wird ein vernachlässigbar kleiner Druckabfall des Windes bewirkt. Gleichzeitig verhindern die Gitter 20, dass gefangene Insekten entkommen oder aus der Falle herausfallen. Der Wind führt zu in Summe zu im Wesentlichen keinem wirksamen dynamischen Druck auf den Schwenkarm 14, da durch die Gitter 20 ein Luftdruck an einer Unterseite 21 des Schwenkarms 14 im Wesentlichen einem Luftdruck an einer Oberseite 22 des Schwenkarms 14 entspricht. Nachdem zwischen der Oberseite 22 und der Unterseite 21 im Wesentlichen keine Differenz in Bezug auf den jeweils vorherrschenden Luftdruck besteht, wirkt daher in Summe keine Kraft auf den Schwenkarm 14 aufgrund eines statischen oder dynamischen Drucks, die andernfalls beispielsweise zu einem ungewünschten Auslösen der Auslöseeinheit 13 führen könnte.

Figur 6 zeigt die Detailansicht B aus Figur 5. Der Auffangbehälter 16 weist eine untere Entleeröffnung 23 zum Entleeren des Auffangbehälters 16 auf. Die Auslöseeinheit 13, in diesem Fall der Schwenkarm 14, weist ein Verschlusselement 24 zum Verschließen der unteren Entleeröffnung 23 auf. Das Verschlusselement 24 verschließt die untere Entleeröffnung 23 in der Sammelstellung 34 (wie dargestellt) des Schwenkarms 14. Die untere Entleeröffnung 23 liegt hingegen in der Auswurfstellung 35 (siehe Figur 9)) des Schwenkarms 14 frei vor, sodass der Auffangbehälter 16 in der Auswurfstellung 35 entleert wird.

Der Schwenkarm 14 ist um eine horizontale Achse 25 schwenkbar, wobei der Schwenkarm ein erstes Ende 26 und ein zweites Ende 27 aufweist. Der Schwenkarm 14 ist zwischen dem ersten Ende 26 und dem zweiten Ende 27 in der Art einer Wippe gelagert. Das Gewicht der gefangenen Insekten wirkt auf das erste Ende 26 des Schwenkarms 14, wobei das zweite Ende 27 des Schwenkarms 14 das Gegengewicht 15 aufweist. In diesem Beispiel ist das Gegengewicht 15 ein Teil des zweiten Endes 27 des Schwenkarms 14. Alternativ dazu kann das Gegengewicht 15 lösbar und/oder beweglich mit dem Schwenkarm 14 verbunden sein.

Das gewichtsabhängige Signal ist in diesem Beispiel ein zeitdiskretes Signal mit Datenpunkten, wobei die Sensoreinheit 12 dazu eingerichtet ist zumindest bei einem Auslösevorgang der Auslöseeinheit 13 einen Datenpunkt aufzunehmen. Die Sensoreinheit 12 ist darüber hinaus dazu eingerichtet, eine Anzahl an Auslösevorgängen der Auslöseeinheit 13 zu erfassen. Dies wird in diesem Beispiel dadurch erreicht, dass die Sensoreinheit 12 dazu eingerichtet ist, eine Auswurfstellung 35 des Schwenkarms 14 zu detektieren und einen Datenpunkt aufzunehmen. Weiters ist die Sensoreinheit 12 dazu eingerichtet, einen Datenpunkt aufzunehmen, wenn der Schwenkarm 14 von der Auswurfstellung 35 in die Sammelstellung 34 übergeführt (d.h. zurückgeführt) wird. Die Sensoreinheit 12 weist dazu einen Näherungssensor 28 auf. Die Sensoreinheit 12 ist dazu eingerichtet, eine Annäherung des Schwenkarms 14 (d.h. des zweiten Endes 27 des Schwenkarms 14) an den Näherungssensor 28 zu detektieren. Der Schwenkarm 14, in diesem Beispiel das zweite Ende 27 des Schwenkarms 14, ist in der Sammelstellung 34 des Schwenkarms 14 näher and dem Näherungssensor 28 als in der Auswurfstellung 35. Der Näherungssensor 28 ist in diesem Beispiel ein Reed-Relais, das bei einer Annäherung des zweiten Endes 27 des Schwenkarms 14 auslöst. Das zweite Ende 27 des Schwenkarms 14 weist dazu einen Magneten 30 auf, der mit dem Reed-Relais der Sensoreinheit 12 zusammenwirkt. Wird der Schwenkarm 14 von der Sammelstellung 34 in die Auswurfstellung 35 übergeführt, wird der Magnet 30 vom Näherungssensor 28 (in diesem Fall vom Reed-Relais) wegbewegt. Das Wegbewegen des Magneten 30 wird vom Näherungssensor 28 erkannt, wodurch von der Sensoreinheit 12 ein Datenpunkt aufgenommen wird. Wird der Schwenkarm 14 von der Auswurfstellung 35 wiederum in die Sammelstellung 34 zurückgeführt, wird der Magnet 30 zum Näherungssensor 28 hinbewegt. Das Hinbewegen des Magneten 30 wird vom Näherungssensor 28 erkannt, wodurch von der Sensoreinheit 12 ein Datenpunkt aufgenommen wird.

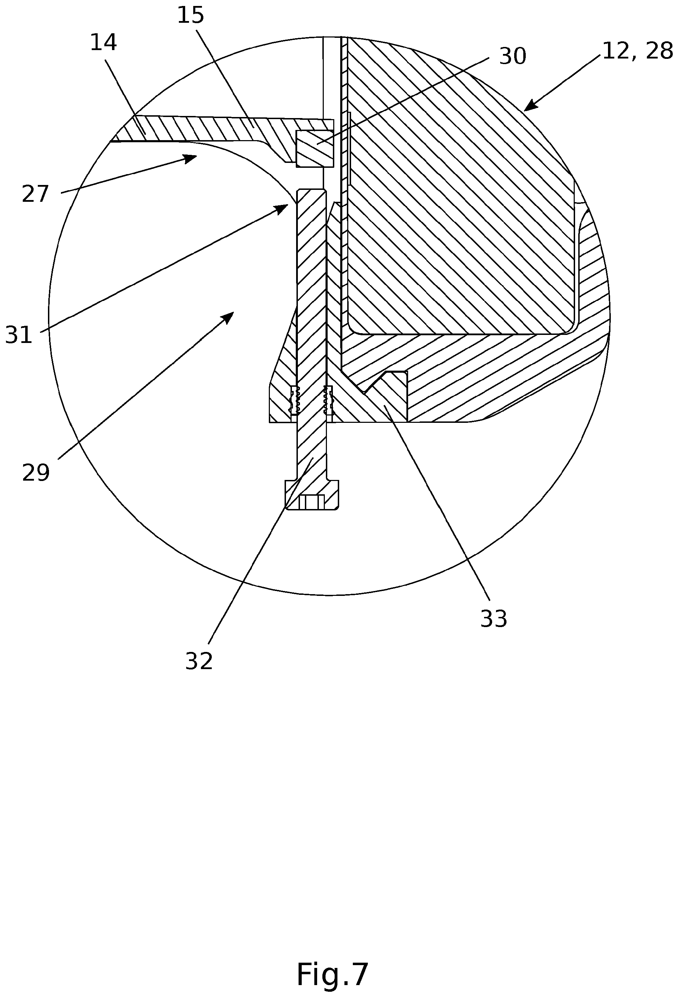

Figur 7 zeigt die in Figur 5 gekennzeichnete Detailansicht C. Die Auslöseeinheit 13 weist ein Einstellelement 29 zur Einstellung des vordefinierten Gewichts auf. In diesem Beispiel weist das Einstellelement 29 den Magneten 30 und ein Gegenelement 31 auf, wobei zwischen dem Magnet 30 und dem Gegenelement 31 eine einstellbare Kraft wirkt. Die einstellbare Kraft wirkt auf den Schwenkarm 14. Der Magnet 30 zieht das Gegenelement 31 an. Daraus resultiert aufgrund der schwenkbaren Lagerung des Schwenkarms 14 um die horizontalte Achse 25 eine Kraft auf das erste Ende 26 des Schwenkarms, die dem Gewicht gefangener Insekten in dem Auffangbehälter entgegenwirkt. Je größer daher die Anziehungskraft zwischen dem Magneten 30 und dem Gegenelement 31 ist, desto höher ist ein entsprechendes erstes Drehmoment, das auf den Schwenkarm 14 wirkt. Das vordefinierte Gewicht, bei dem die Auslöseeinheit 13 auslöst, bewirkt ein dem ersten Drehmoment entgegengesetztes zweites Drehmoment, das auf den Schwenkarm 14 wirkt. Je höher demnach die Anziehungskraft zwischen dem Magneten 30 und dem Gegenelement 31 ist, desto höher ist letztlich das vordefinierte Gewicht, bei dem die Auslöseeinheit 13 auslöst und der Schwenkarm 14 entsprechend von der Sammelstellung 34 in die Auswurfstellung 35 übergeführt wird. Die Anziehungskraft zwischen dem Magneten 30 und dem Gegenelement 31 hängt von einem Abstand zwischen diesen beiden Elementen ab, wobei der Abstand in der Sammelstellung 34 des Schwenkarms relevant ist. Der Abstand zwischen dem Magneten 30 und dem Gegenelement 31 ist einstellbar, in diesem Beispiel mittels einer Einstellschraube 32, die zugleich das Gegenelement 31 bildet. Die Einstellschraube 32 weist ein Außengewinde auf das mit einem Innengewinde eines Befestigungselements 33 zusammenwirkt. Wird die Einstellschraube 32 gegenüber dem Innengewinde verdreht, ändert sich dementsprechend der Abstand zwischen dem Magneten 30 und dem Gegenelement 31. Beispielsweise kann an der Einstellschraube 32 und/oder am Befestigungselement eine Skala vorgesehen sein, an der beispielsweise das zu der jeweiligen Stellung der Einstellschraube 32 korrespondierende eingestellte vordefinierte Gewicht ablesbar ist.

Figur 9 zeigt im Wesentlichen die Detailansicht aus Figur 6, wobei sich der Schwenkarm 14 in der Auswurfstellung 35 befindet. Die untere Entleeröffnung 23 des Auffangbehälters 16 liegt in der Auswurfstellung 35 wie dargestellt frei vor, sodass der Auffangbehälter 16 in der Auswurfstellung 35 entleert wird. Der Schwenkarm 14, in diesem Fall das zweite Ende 27 des Schwenkarms 14, befindet sich in der Sammelstellung 34 des Schwenkarms 14 näher an dem Näherungssensor 12 sein als in der Auswurfstellung 35. Daher ist der Magnet 30 in der Auswurfstellung 35 weiter von dem Näherungsensor 28, der in diesem Beispiel ein Reed-Relais ist, entfernt. Die Sensoreinheit 12 ist in dieser beispielhaften Ausführungsform dazu eingerichtet, sowohl bei dem Wegbewegen des Magneten 30 vom Reed-Relais (d.h. beim Überführen des Schwenkarms 14 von der Sammelstellung 34 in die Auswurfstellung 45) wie auch beim Hinbewegen des Magenten 30 zum Reed-Relais (d.h. beim Überführen des Schwenkarms 14 von der Auswurfstellung 35 in die Sammelstellung 34) einen Datenpunkt aufzunehmen.

Sobald der Auffangbehälter 16 entleert ist, wird der Schwenkarm 14 aufgrund des Gegengewichts 15 von der Auswurfstellung 35 in die Sammelstellung 34 zurückgeführt. Aufgrund des Gegengewichts 15 wirkt ein Drehmoment auf den Schwenkarm 14, das zu einer Drehung des Schwenkarms 14 um die horizontale Achse 25 führt. Durch diese Drehung wird das Zurückführen des Schwenkarms 14 von der Auswurfstellung 35 in die Sammelstellung 34 bewirkt.

## Patentansprüche

1. Insektenfalle (9), insbesondere Borkenkäferfalle, zur Bestimmung einer Anzahl gefangener Insekten, insbesondere gefangener Borkenkäfer, mit einer Sensoreinheit (12), wobei die Sensoreinheit (12) dazu eingerichtet ist, zur Bestimmung der Anzahl der gefangenen Insekten ein gewichtsabhängiges Signal zu erfassen, wobei das gewichtsabhängige Signal von einem Gewicht der gefangenen Insekten abhängig ist, wobei die Insektenfalle (9) eine Auslöseeinheit (13) mit einem Schwenkarm (14) aufweist, wobei das Gewicht der gefangenen Insekten auf den Schwenkarm (14) wirkt, wobei die Auslöseeinheit (13) dazu eingerichtet ist, bei einem vordefinierten Gewicht auszulösen und den Schwenkarm (14) von einer Sammelstellung (34) in eine Auswurfstellung (35) überzuführen, wobei die Insektenfalle (9) dazu eingerichtet ist, die gefangenen Insekten in der Auswurfstellung (35) des Schwenkarms (14) zumindest teilweise aus der Insektenfalle (9) zu entleeren, **dadurch gekennzeichnet, dass** die Auslöseeinheit (13) ein Gegengewicht (15) aufweist, wobei die Auslösseinheit (13) dazu eingerichtet ist, den Schwenkarm (14) aufgrund des Gegengewichts (15) von der Auswurfstellung (35) in die Sammelstellung (34) zurückzuführen.

2. Insektenfalle (9) nach Anspruch 1, **dadurch gekennzeichnet, dass** das gewichtsabhängige Signal ein zeitdiskretes Signal mit Datenpunkten ist, wobei die Sensoreinheit (12) dazu eingerichtet ist zumindest bei einem Auslösevorgang der Auslöseeinheit (13) einen Datenpunkt aufzunehmen.

3. Insektenfalle (9) nach einem der Ansprüche 1 oder 2, **dadurch gekennzeichnet, dass** die Sensoreinheit (12) dazu eingerichtet ist, eine Anzahl an Auslösevorgängen der Auslöseeinheit (13) zu erfassen.

4. Insektenfalle (9) nach einem der Ansprüche 1 bis 3, **gekennzeichnet durch** einen Auffangbehälter (16) für die gefangenen Insekten, wobei das gewichtsabhängige Signal von einem Gewicht von gefangenen Insekten in dem Auffangbehälter (16) abhängt, wobei die Auslöseeinheit (13) dazu eingerichtet ist, den Auffangbehälter (16) in der Auswurfstellung (35) des Schwenkarms (14) zu entleeren.

5. Insektenfalle (9) nach Anspruch 4, **gekennzeichnet durch** eine Windabfangeinheit (17), wobei die Windabfangeinheit (17) dazu eingerichtet ist, zumindest den Auffangbehälter (16) vor Wind zu schützen.

6. Insektenfalle (9) nach Anspruch 5, **dadurch gekennzeichnet, dass** die Windabfangeinheit (17) eine Windabfangeinheit-Außenwand (19) aufweist, wobei die Windabfangeinheit-Außenwand (19) zumindest abschnittsweise luftdurchlässig, insbesondere gitterförmig und/oder porös, ausgeführt ist.

7. Insektenfalle (9) nach einem der Ansprüche 4 bis 6, **dadurch gekennzeichnet, dass** der Auffangbehälter (16) eine untere Entleeröffnung (23) zum Entleeren des Auffangbehälters (16) aufweist, wobei die Auslöseeinheit (13), insbesondere der Schwenkarm (14), ein Verschlusselement (24) zum Verschließen der unteren Entleeröffnung (23) aufweist, wobei das Verschlusselement (24) die untere Entleeröffnung (23) in der Sammelstellung (34) des Schwenkarms (14) verschließt, wobei die untere Entleeröffnung (23) in der Auswurfstellung (35) des Schwenkarms (14) frei vorliegt, sodass der Auffangbehälter (16) in der Auswurfstellung (35) entleert wird.

8. Insektenfalle (9) nach einem der Ansprüche 1 bis 7, **dadurch gekennzeichnet, dass** der Schwenkarm (14) um eine horizontale Achse (25) schwenkbar ist, wobei der Schwenkarm (14) ein erstes Ende (26) und ein zweites Ende (27) aufweist, wobei der Schwenkarm (14) zwischen dem ersten Ende (26) und dem zweiten Ende (27) in der Art einer Wippe gelagert ist, wobei das Gewicht der gefangenen Insekten auf das erste Ende (26) des Schwenkarms (14) wirkt, wobei das zweite Ende (27) des Schwenkarms (14) das Gegengewicht (15) aufweist.

9. Insektenfalle (9) nach einem der Ansprüche 2 bis 8, **dadurch gekennzeichnet, dass** die Sensoreinheit (12) dazu eingerichtet ist, eine Auswurfstellung (35) und/oder eine Sammelstellung (34) des Schwenkarms (14) zu detektieren und einen Datenpunkt aufzunehmen.

10. Insektenfalle (9) nach Anspruch 9, **dadurch gekennzeichnet, dass** die Sensoreinheit (12) einen Näherungssensor (28) aufweist, wobei die Sensoreinheit (12) dazu eingerichtet ist, eine Annäherung des Schwenkarms (14) an den Näherungssensor (28) zu detektieren.

11. Insektenfalle (9) nach einem der Ansprüche 1 bis 10, **dadurch gekennzeichnet, dass** die Auslöseeinheit (13) ein Einstellelement (29) zur Einstellung des vordefinierten Gewichts aufweist.

12. Insektenfalle (9) nach Anspruch 11, **dadurch gekennzeichnet, dass** das Einstellelement (29) einen Magneten (30) und ein Gegenelement (31) aufweist, wobei zwischen dem Magnet (30) und dem Gegenelement (31) eine einstellbare Kraft auf wirkt, wobei die einstellbare Kraft auf den Schwenkarm (14) wirkt.

13. Insektenfalle (9) nach Anspruch 12, **dadurch gekennzeichnet, dass** ein Abstand zwischen dem Magneten (30) und dem Gegenelement (31), beispielsweise mittels einer Einstellschraube (29), einstellbar ist.

14. Insektenfalle (9) nach einem der Ansprüche 1 bis 13, **gekennzeichnet durch** ein Fallrohr, wobei das Fallrohr derart angeordnet ist, das gefangene Insekten nach dem Auslösen der Auslöseeinheit (13) durch das Fallrohr fallen, wobei das Fallrohr optional ein Kontaktgift zur Euthanasierung der gefangenen Insekten aufweist.

15. Verfahren zur Bestimmung einer Anzahl gefangener Insekten, insbesondere gefangener Borkenkäfer, mit einer Insektenfalle (9) nach einem der Ansprüche 1 bis 14, mit den Schritten:
- Fangen von Insekten mittels der Insektenfalle (9);
- Erfassen eines gewichtsabhängigen Signals, wobei das gewichtsabhängige Signal von einem Gewicht der gefangenen Insekten abhängig ist;
- Entleeren der Insektenfalle (9) bei Erreichen eines vordefinierten Gewichts an gefangenen Insekten mittels einer Auslöseeinheit (13) mit einem Schwenkarm (14), wobei die Auslöseeinheit (13) bei einem vordefinierten Gewicht an gefangenen Insekten in der Insektenfalle (9) auslöst und den Schwenkarm (14) von einer Sammelstellung (34) in eine Auswurfstellung (35) überführt, wobei die gefangenen Insekten in der Auswurfstellung (35) des Schwenkarms (14) zumindest teilweise aus der Insektenfalle (9) entleert werden;
- Zurückführen des Schwenkarms (14) von der Auswurfstellung (35) in die Sammelstellung (34) aufgrund eines Gegengewichts (15) der Auslöseeinheit (13); und
- Ermitteln einer Anzahl an gefangenen Insekten aus dem gewichtsabhängigen Signal.

## Claims

1. Insect trap (9), in particular bark beetle trap, for determining a number of trapped insects, in particular trapped bark beetles, comprising a sensor unit (12), wherein the sensor unit (12) is configured to detect a weight-dependent signal for determining the number of trapped insects, wherein the weight-dependent signal is dependent on a weight of the trapped insects, wherein the insect trap (9) comprises a trigger unit (13) with a pivot arm (14), wherein the weight of the trapped insects acts on the pivot arm (14), wherein the trigger unit (13) is configured to trigger at a predefined weight and to transfer the pivot arm (14) from a collecting position (34) to an ejection position (35), wherein the insect trap (9) is configured to at least partially empty the trapped insects from the insect trap (9) in the ejection position (35) of the pivot arm (14), **characterized in that** the trigger unit (13) comprises a counterweight (15), wherein the trigger unit (13) is configured to return the pivot arm (14) from the ejection position (35) to the collecting position (34) due to the counterweight (15).

2. Insect trap (9) according to claim 1, **characterized in that** the weight-dependent signal is a time-discrete signal with data points, wherein the sensor unit (12) is configured to record a data point at least during a triggering process of the trigger unit (13).

3. Insect trap (9) according to one of claims 1 or 2, **characterized in that** the sensor unit (12) is configured to detect a number of triggering processes of the trigger unit (13).

4. Insect trap (9) according to any one of claims 1 to 3, **characterized by** a collection container (16) for the trapped insects, wherein the weight-dependent signal depends on a weight of trapped insects in the collection container (16), wherein the trigger unit (13) is configured to empty the collection container (16) in the ejection position (35) of the pivot arm (14).

5. Insect trap (9) according to claim 4, **characterized by** a wind catcher unit (17), wherein the wind catcher unit (17) is configured to protect at least the collection container (16) from wind.

6. Insect trap (9) according to claim 5, **characterized in that** the wind catcher unit (17) comprises a wind catcher unit outer wall (19), the wind catcher unit outer wall (19) being designed to be permeable to air, in particular grid-shaped and/or porous, at least in sections.

7. Insect trap (9) according to one of claims 4 to 6, **characterized in that** the collection container (16) comprises a lower emptying opening (23) for emptying the collection container (16), wherein the trigger unit (13), in particular the pivot arm (14), comprising a clasping element (24) for closing the lower emptying opening (23), wherein the clasping element (24) closes the lower emptying opening (23) in the collecting position (34) of the pivot arm (14), wherein the lower emptying opening (23) being free in the ejection position (35) of the pivot arm (14) in such a way that the collection container (16) is emptied in the ejection position (35).

8. Insect trap (9) according to any one of claims 1 to 7, **characterized in that** the pivot arm (14) is pivotable about a horizontal axis (25), wherein the pivot arm (14) comprises a first end (26) and a second end (27), wherein the pivot arm (14) is mounted between the first end (26) and the second end (27) in the manner of a rocker, wherein the weight of the trapped insects is acting on the first end (26) of the pivot arm (14), wherein the second end (27) of the pivot arm (14) comprises the counterweight (15).

9. Insect trap (9) according to any one of claims 2 to 8, **characterized in that** the sensor unit (12) is configured to detect an ejection position (35) and/or a collecting position (34) of the pivot arm (14) and to record a data point.

10. Insect trap (9) according to claim 9, **characterized in that** the sensor unit (12) comprises a proximity sensor (28), wherein the sensor unit (12) is configured to detect an approach of the pivot arm (14) to the proximity sensor (28).

11. Insect trap (9) according to one of claims 1 to 10, **characterized in that** the trigger unit (13) comprises an adjusting element (29) for adjusting the predefined weight.

12. Insect trap (9) according to claim 11, **characterized in that** the adjusting element (29) comprises a magnet (30) and a counter element (31), whereby an adjustable force is acting between the magnet (30) and the counter element (31), whereby the adjustable force is acting on the pivot arm (14).

13. Insect trap (9) according to claim 12, **characterized in that** a distance between the magnet (30) and the counter element (31) can be adjusted, for example by means of an adjusting screw (29).

14. Insect trap (9) according to any one of claims 1 to 13, **characterized by** a downpipe, wherein the downpipe is arranged in such a way that trapped insects fall through the downpipe after triggering the trigger unit (13), wherein the downpipe optionally comprises a contact poison for euthanizing the trapped insects.

15. Method for determining a number of trapped insects, in particular trapped bark beetles, with an insect trap (9) according to any one of claims 1 to 14, comprising the steps of:
- trapping insects by means of the insect trap (9);
- detecting a weight-dependent signal, wherein the weight-dependent signal is dependent on a weight of the trapped insects;
- emptying the insect trap (9) when a predefined weight of trapped insects is reached by means of a trigger unit (13) with a pivot arm (14), wherein the trigger unit (13) gets triggered at a predefined weight of trapped insects in the insect trap (9) and transfers the pivot arm (14) from a collecting position (34) into an ejection position (35), wherein the trapped insects are at least partially emptied from the insect trap (9) in the ejection position (35) of the pivot arm (14);
- returning the pivot arm (14) from the ejection position (35) to the collecting position (34) due to a counterweight (15) of the trigger unit (13); and
- determining a number of trapped insects from the weight-dependent signal.

## Revendications

1. Piège à insectes (9), notamment piège à scolytes, pour déterminer un nombre d'insectes capturés, notamment de scolytes capturés, comportant une unité de capteur (12), l'unité de capteur (12) étant configurée pour saisir un signal dépendant du poids afin de déterminer le nombre d'insectes capturés, le signal dépendant du poids étant fonction d'un poids des insectes capturés, le piège à insectes (9) comportant une unité de déclenchement (13) avec un bras pivotant (14), le poids des insectes capturés agissant sur le bras pivotant (14), l'unité de déclenchement (13) étant configurée pour se déclencher à un poids prédéfini et faire passer le bras pivotant (14) d'une position de collecte (34) à une position d'éjection (35), le piège à insectes (9) étant configuré pour vider au moins partiellement les insectes capturés du piège à insectes (9) dans la position d'éjection (35) du bras pivotant (14), **caractérisé en ce que** l'unité de déclenchement (13) comporte un contrepoids (15), l'unité de déclenchement (13) étant configurée pour ramener le bras pivotant (14) de la position d'éjection (35) à la position de collecte (34) en raison du contrepoids (15).

2. Piège à insectes (9) selon la revendication 1, **caractérisé en ce que** le signal dépendant du poids est un signal à temps discret avec des points de données, l'unité de capteur (12) étant configurée pour enregistrer un point de données au moins lors d'un processus de déclenchement de l'unité de déclenchement (13).

3. Piège à insectes (9) selon l'une des revendications 1 ou 2, **caractérisé en ce que** l'unité de capteur (12) est configurée pour saisir un nombre de processus de déclenchement de l'unité de déclenchement (13).

4. Piège à insectes (9) selon l'une des revendications 1 à 3, **caractérisé par** un récipient collecteur (16) pour les insectes capturés, le signal dépendant du poids dépendant d'un poids d'insectes capturés dans le récipient collecteur (16), l'unité de déclenchement (13) étant configurée pour vider le récipient collecteur (16) dans la position d'éjection (35) du bras pivotant (14).

5. Piège à insectes (9) selon la revendication 4, **caractérisé par** une unité pare-vent (17), l'unité pare-vent (17) étant configurée pour protéger au moins le récipient collecteur (16) du vent.

6. Piège à insectes (9) selon la revendication 5, **caractérisé en ce que** l'unité pare-vent (17) comporte une paroi extérieure d'unité pare-vent (19), la paroi extérieure d'unité pare-vent (19) étant réalisée au moins par sections perméable à l'air, notamment en forme de grille et/ou poreuse.

7. Piège à insectes (9) selon l'une des revendications 4 à 6, **caractérisé en ce que** le récipient collecteur (16) comporte une ouverture de vidange inférieure (23) pour vider le récipient collecteur (16), l'unité de déclenchement (13), notamment le bras pivotant (14), comportant un élément de fermeture (24) pour fermer l'ouverture de vidange inférieure (23), l'élément de fermeture (24) fermant l'ouverture de vidange inférieure (23) dans la position de collecte (34) du bras pivotant (14), l'ouverture de vidange inférieure (23) étant libre dans la position d'éjection (35) du bras pivotant (14), de sorte que le récipient collecteur (16) soit vidé dans la position d'éjection (35).

8. Piège à insectes (9) selon l'une des revendications 1 à 7, **caractérisé en ce que** le bras pivotant (14) est pivotant autour d'un axe horizontal (25), le bras pivotant (14) comportant une première extrémité (26) et une seconde extrémité (27), le bras pivotant (14) étant monté entre la première extrémité (26) et la seconde extrémité (27) à la manière d'une bascule, le poids des insectes capturés agissant sur la première extrémité (26) du bras pivotant (14), la seconde extrémité (27) du bras pivotant (14) comportant le contrepoids (15) .

9. Piège à insectes (9) selon l'une des revendications 2 à 8, **caractérisé en ce que** l'unité de capteur (12) est configurée pour détecter une position d'éjection (35) et/ou une position de collecte (34) du bras pivotant (14) et enregistrer un point de données.

10. Piège à insectes (9) selon la revendication 9, **caractérisé en ce que** l'unité de capteur (12) comporte un capteur de proximité (28), l'unité de capteur (12) étant configurée pour détecter un rapprochement du bras pivotant (14) vers le capteur de proximité (28).

11. Piège à insectes (9) selon l'une des revendications 1 à 10, **caractérisé en ce que** l'unité de déclenchement (13) comporte un élément de réglage (29) pour régler le poids prédéfini.

12. Piège à insectes (9) selon la revendication 11, **caractérisé en ce que** l'élément de réglage (29) comporte un aimant (30) et un contre-élément (31), une force réglable agissant entre l'aimant (30) et le contre-élément (31), la force réglable agissant sur le bras pivotant (14).

13. Piège à insectes (9) selon la revendication 12, **caractérisé en ce qu'**une distance entre l'aimant (30) et le contre-élément (31) est réglable, par exemple au moyen d'une vis de réglage (29).

14. Piège à insectes (9) selon l'une des revendications 1 à 13, **caractérisé par** un tube de chute, le tube de chute étant disposé de telle sorte que les insectes capturés tombent à travers le tube de chute après le déclenchement de l'unité de déclenchement (13), le tube de chute comportant optionnellement un poison de contact pour l'euthanasie des insectes capturés.

15. Procédé pour déterminer un nombre d'insectes capturés, notamment de scolytes capturés, avec un piège à insectes (9) selon l'une des revendications 1 à 14, comportant les étapes:
- Capture d'insectes au moyen du piège à insectes (9);
- Saisie d'un signal dépendant du poids, le signal dépendant du poids étant fonction d'un poids des insectes capturés;
- Vidange du piège à insectes (9) lors de l'atteinte d'un poids prédéfini d'insectes capturés au moyen d'une unité de déclenchement (13) avec un bras pivotant (14), l'unité de déclenchement (13) se déclenchant à un poids prédéfini d'insectes capturés dans le piège à insectes (9) et faisant passer le bras pivotant (14) d'une position de collecte (34) à une position d'éjection (35), les insectes capturés étant au moins partiellement vidés du piège à insectes (9) dans la position d'éjection (35) du bras pivotant (14);
- Retour du bras pivotant (14) de la position d'éjection (35) à la position de collecte (34) en raison d'un contrepoids (15) de l'unité de déclenchement (13); et
- Détermination d'un nombre d'insectes capturés à partir du signal dépendant du poids.
